(19) Europäisches Patentamt / European Patent Office / Office européen des brevets

(11) **EP 4 675 423 A1**

(12) **EUROPEAN PATENT APPLICATION**
published in accordance with Art. 153(4) EPC

(43) Date of publication:
**07.01.2026 Bulletin 2026/02**

(21) Application number: **24773882.6**

(22) Date of filing: **29.02.2024**

(51) International Patent Classification (IPC):
**G06F 8/658** (2018.01)

(52) Cooperative Patent Classification (CPC):
**G06F 8/658; G06F 9/445**

(86) International application number:
**PCT/CN2024/079345**

(87) International publication number:
**WO 2024/193314 (26.09.2024 Gazette 2024/39)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **22.03.2023 CN 202310317574**

(71) Applicant: **HUAWEI TECHNOLOGIES CO., LTD.**
**Shenzhen 518129 (CN)**

(72) Inventors:
• **BAO, Qunmin**
  **Shenzhen, Guangdong 518129 (CN)**
• **YAN, Huijun**
  **Shenzhen, Guangdong 518129 (CN)**
• **CHEN, Hong**
  **Shenzhen, Guangdong 518129 (CN)**

(74) Representative: **Thun, Clemens**
**Mitscherlich PartmbB**
**Patent- und Rechtsanwälte**
**Karlstraße 7**
**80333 München (DE)**

(54) **PATCH EXECUTION METHOD AND APPARATUS**

(57) This application provides a patch execution method and apparatus. The method includes: obtaining a first patch function, and storing the first patch function in a patch area, where the first patch function is used to modify a first original function in a program, an address of the first original function is a first address, and an address of the first patch function is a second address; inserting an exception instruction before a first instruction in the first original function, where the exception instruction is used by a thread to suspend execution of an instruction in the first original function after execution advances to the exception instruction; and modifying the exception instruction to a jump instruction based on the first address and the second address, where the jump instruction is used by the thread to jump to the patch area when the first original function is accessed, to execute an instruction in the first patch function. In this way, a defect in a to-be-patched original function in a program can be fixed by using a patch function. In addition, the program can be patched without restarting the program, thereby improving program execution efficiency and patching efficiency.

S1701: Obtain a first patch function, and store the first patch function in a patch area, where the first patch function is used to modify a first original function in a program, an address of the first original function is a first address, and an address of the first patch function is a second address

S1702: Insert an exception instruction before a first instruction in the first original function, where the exception instruction is used by a thread to suspend execution of an instruction in the first original function after execution advances to the exception instruction

S1703: Modify the exception instruction to a jump instruction based on the first address and the second address, where the jump instruction is used by the thread to jump to the patch area when the first original function is accessed, to execute an instruction in the first patch function

FIG. 17

## Description

This application claims priority to Chinese Patent Application No. 202310317574.0, filed with the China National Intellectual Property Administration on March 22, 2023 and entitled "PATCH EXECUTION METHOD AND APPARATUS", which is incorporated herein by reference in its entirety.

## TECHNICAL FIELD

This application relates to the field of computer technologies, and in particular, to a patch execution method and apparatus.

## BACKGROUND

There may be a defect in a program during running. To ensure that the program can run normally, the defect in the program needs to be corrected. If the program is suspended to fix the defect, performance of the program and running efficiency of the program are affected. Therefore, how to fix a defect in a program without suspending the program remains an area for further research.

## SUMMARY

This application provides a patch execution method and apparatus, to patch a program without restarting the program, thereby improving program execution efficiency and patching efficiency.

According to a first aspect, this application provides a patch execution method. The method includes: obtaining a first patch function, and storing the first patch function in a patch area, where the first patch function is used to modify a first original function in a program, an address of the first original function is a first address, and an address of the first patch function is a second address; inserting an exception instruction before a first instruction in the first original function, where the exception instruction is used by a thread to suspend execution of an instruction in the first original function after execution advances to the exception instruction; and modifying the exception instruction to a jump instruction based on the first address and the second address, where the jump instruction is used by the thread to jump to the patch area when the first original function is accessed, to execute an instruction in the first patch function.

The jump instruction is inserted, so that it can be ensured that after a patch is activated, a thread accessing the original function can jump to and access the patch function instead of the original function.

According to this application, a defect in a to-be-patched original function in a program can be fixed by using a patch function. The program can be patched without restarting the program, thereby improving program execution efficiency and patching efficiency. In this application, an exception instruction is inserted into a function header of the original function, and then the exception instruction is modified to a jump instruction. In this case, an area in which the jump instruction is located is a critical section. In this way, all threads accessing the original function first access the exception instruction, and therefore all these threads are suspended. There is no thread accessing an instruction in the critical section, and therefore there is no need to trap into an operating system kernel to find whether there is a thread accessing the instruction in the critical section. In other words, the patch execution method provided in this application does not depend on the kernel. Even if application software in which the program is located has no permission to access a current operating system, that is, the current operating system is a third-party operating system, the program can still be patched.

With reference to the first aspect, in a possible implementation, modifying the exception instruction to the jump instruction based on the first address and the second address specifically includes: when an offset between the first address and the second address is less than a preset offset, modifying the exception instruction to a first jump instruction based on the offset between the first address and the second address, where the first jump instruction is used by the thread to jump to the patch area when the first original function is accessed, to execute the instruction in the first patch function. A jump distance of the jump instruction is limited. When a one-step jump may be made, a jump from the original function to the patch function may be directly made.

With reference to the first aspect, in a possible implementation, the exception instruction includes an exception instruction operation code of p bytes, and q null bytes are further included after the exception instruction; and modifying the exception instruction to the first jump instruction based on the offset between the first address and the second address specifically includes: filling the q null bytes with the offset between the first address and the second address; and after the q null bytes are filled with the offset between the first address and the second address, replacing the exception instruction operation code of the p bytes with a jump instruction operation code of the p bytes, to obtain the first jump instruction. In this way, finally, the exception instruction operation code is modified to the jump instruction operation code, so that it can be ensured that no jump error occurs. If the exception instruction operation code is first modified to the jump instruction operation code, and then the q null bytes are filled with the offset between the first address and the second address, before the q null bytes are filled with the offset between the first address and the second address, if another thread accesses the original function, a jump is directly made based on the jump instruction, and consequently an access error occurs.

With reference to the first aspect, in a possible implementation, modifying the exception instruction to the jump instruction based on the first address and the second address specifically includes: modifying an instruction in a first function trampoline based on the second address when an offset between the first address and the second address is greater than a preset offset, to obtain a third jump instruction, where an address of the first function trampoline is a third address; and modifying the exception instruction based on the first address and the third address, to obtain a second jump instruction, where the second jump instruction is used by the thread to jump to the first function trampoline when the first original function is accessed, to execute the third jump instruction in the first function trampoline, and the third jump instruction is used to jump to the patch area when being executed by the thread, to execute the instruction in the first patch function. In this way, a jump distance of the jump instruction is limited. When a one-step jump may not be made, a jump from the original function to the function trampoline may be first made, and then a jump from the function trampoline to the patch function may be made.

With reference to the first aspect, in a possible implementation, after the third jump instruction is obtained through modification, the second jump instruction is obtained through modification. In this way, the instruction in the first function trampoline is first modified to obtain the third jump instruction, and then the exception instruction is modified to the second jump instruction. If the exception instruction is first modified to the second jump instruction, and then the instruction in the first function trampoline is modified to obtain the third jump instruction, before the instruction in the first function trampoline is modified to obtain the third jump instruction, if another thread accesses the original function, a jump to the trampoline is directly made based on the second jump instruction. However, because the third jump instruction in the trampoline is not completely modified, an access error occurs.

With reference to the first aspect, in a possible implementation, the exception instruction includes an exception instruction operation code of p bytes, and q null bytes are further included after the exception instruction; modifying the instruction in the first function trampoline based on the second address, to obtain the third jump instruction specifically includes: filling a data part in the first function trampoline with the second address, to obtain the third jump instruction; and modifying the exception instruction based on the first address and the third address, to obtain the second jump instruction specifically includes: filling the q null bytes with an offset between the first address and the third address; and after the q null bytes are filled with the offset between the first address and the third address, replacing the exception instruction operation code of the p bytes with a jump instruction operation code of the p bytes, to obtain the second jump instruction. In this way, finally, the exception instruction operation code is modified to the jump instruction operation code, so that it can be ensured that no jump error occurs. If the exception instruction operation code is first modified to the jump instruction operation code, and then the q null bytes are filled with the offset between the first address and the third address, before the q null bytes are filled with the offset between the first address and the third address, if another thread accesses the original function, a jump is directly made based on the jump instruction, and consequently an access error occurs.

With reference to the first aspect, in a possible implementation, modifying the instruction in the first function trampoline based on the second address when the offset between the first address and the second address is greater than the preset offset, to obtain the third jump instruction specifically includes: when the offset between the first address and the second address is greater than the preset offset, determining the first function trampoline in an idle state from a plurality of function trampolines; and when the first function trampoline has not been used, modifying the instruction in the first function trampoline based on the second address, to obtain the third jump instruction; or when the first function trampoline has been previously used, waiting until duration for which the first function trampoline is not occupied exceeds first duration, and then modifying the instruction in the first function trampoline based on the second address, to obtain the third jump instruction. In this way, a function trampoline may be allocated to the original function. There are different allocation manners for different types of trampolines.

With reference to the first aspect, in a possible implementation, the method further includes: obtaining a second patch function, and storing the second patch function in the patch area, where the second patch function is used to modify the first original function in the program, and an address of the second patch function is a fourth address; and modifying the data part in the first function trampoline to the fourth address, to obtain a fourth jump instruction, where the fourth jump instruction is used to jump to the patch area when being executed by the thread, to execute an instruction in the second patch function. In this way, when a same function is repeatedly patched, there is no need to reconstruct a jump instruction or repeatedly construct an instruction in a function trampoline, and only a data part in the function trampoline needs to be modified, thereby reducing operation steps.

With reference to the first aspect, in a possible implementation, when a storage address of the address of the first patch function is not capable of being read into a cache line, a null byte is added before the storage address of the address of the first patch function, to change the storage address of the address of the first patch function, where a storage address that is of the address of the first patch function and that is obtained after the change is in a same cache line when being read into a cache. In this way, it can be ensured that a patch function address can be written into a same cache line at a time, to avoid an access error.

With reference to the first aspect, in a possible implementation, the method further includes: when a first thread accesses the exception instruction inserted into the first original function, suspending execution of the instruction in the first original function by the first thread; and after the exception instruction is modified to the jump instruction based on the offset between the first address and the second address, waking up the first thread to jump to the patch area by using the jump instruction, to execute the instruction in the first patch function. In this way, before the jump instruction is completely modified, the thread accessing the original function is suspended. After the jump instruction is completely modified, the suspended thread is woken up to jump to the patch area by using the jump instruction, to execute the patch function.

With reference to the first aspect, in a possible implementation, the method further includes: after the exception instruction is modified to the jump instruction based on the offset between the first address and the second address, when a second thread accesses the jump instruction inserted into the first original function, controlling the second thread to jump to the patch area by using the jump instruction, to execute the instruction in the first patch function. After the jump instruction is completely modified, the thread accessing the original function directly jumps to the patch area by using the jump instruction, to execute the patch function.

According to a second aspect, this application provides a patch execution apparatus. The patch execution apparatus includes an obtaining module, a patch module, and an execution module. The obtaining module is configured to: obtain a first patch function, and store the first patch function in a patch area, where the first patch function is used to modify a first original function in a program, an address of the first original function is a first address, and an address of the first patch function is a second address. The patch module is configured to insert an exception instruction before a first instruction in the first original function, where the exception instruction is used by a thread to suspend execution of an instruction in the first original function after execution advances to the exception instruction. The execution module is configured to modify the exception instruction to a jump instruction based on the first address and the second address, where the jump instruction is used by the thread to jump to the patch area when the first original function is accessed, to execute an instruction in the first patch function.

According to this application, a defect in a to-be-patched original function in a program can be fixed by using a patch function. The program can be patched without restarting the program, thereby improving program execution efficiency and patching efficiency. In this application, an exception instruction is inserted into a function header of the original function. In this case, the exception instruction is a critical section. In this way, all threads accessing the original function first access the exception instruction, and therefore all these threads are suspended. There is no thread accessing an instruction in the critical section, and therefore there is no need to trap into an operating system kernel to find whether there is a thread accessing the instruction in the critical section. In other words, the patch execution method provided in this application does not depend on the kernel. Even if application software in which the program is located has no permission to access a current operating system, that is, the current operating system is a third-party operating system, the program can still be patched.

With reference to the second aspect, in a possible implementation, the execution module is specifically configured to: when an offset between the first address and the second address is less than a preset offset, modify the exception instruction to a first jump instruction based on the offset between the first address and the second address, where the first jump instruction is used by the thread to jump to the patch area when the first original function is accessed, to execute the instruction in the first patch function. A jump distance of the jump instruction is limited. When a one-step jump may be made, a jump from the original function to the patch function may be directly made.

With reference to the second aspect, in a possible implementation, the exception instruction includes an exception instruction operation code of p bytes, and q null bytes are further included after the exception instruction; and the execution module is specifically configured to: fill the q null bytes with the offset between the first address and the second address; and after the q null bytes are filled with the offset between the first address and the second address, replace the exception instruction operation code of the p bytes with a jump instruction operation code of the p bytes, to obtain the first jump instruction. In this way, finally, the exception instruction operation code is modified to the jump instruction operation code, so that it can be ensured that no jump error occurs. If the exception instruction operation code is first modified to the jump instruction operation code, and then the q null bytes are filled with the offset between the first address and the second address, before the q null bytes are filled with the offset between the first address and the second address, if another thread accesses the original function, a jump is directly made based on the jump instruction, and consequently an access error occurs.

With reference to the second aspect, in a possible implementation, the execution module is specifically configured to: modify an instruction in a first function trampoline based on the second address when an offset between the first address and the second address is greater than a preset offset, to obtain a third jump instruction, where an address of the first function trampoline is a third address; and modify the exception instruction based on the first address and the third address, to obtain a second jump instruction, where the second jump instruction is used by the thread to jump to the first function trampoline when the first original function is accessed, to execute the third jump instruction in the first function trampoline, and the third jump instruction is used to jump to the patch area when being executed by the thread, to execute the instruction in the first patch function. In this way, a jump distance of the jump instruction is limited. When a one-step jump may not be made, a jump from the original function to the function trampoline may be first made, and then a jump from the function trampoline to the patch function may be made.

With reference to the second aspect, in a possible implementation, after the third jump instruction is obtained through modification, the second jump instruction is obtained through modification. In this way, the instruction in the first function trampoline is first modified to obtain the third jump instruction, and then the exception instruction is modified to the second jump instruction. If the exception instruction is first modified to the second jump instruction, and then the instruction in the first function trampoline is modified to obtain the third jump instruction, before the instruction in the first function trampoline is modified to obtain the third jump instruction, if another thread accesses the original function, a jump to the trampoline is directly made based on the second jump instruction. However, because the third jump instruction in the trampoline is not completely modified, an access error occurs.

With reference to the second aspect, in a possible implementation, the exception instruction includes an exception instruction operation code of p bytes, and q null bytes are further included after the exception instruction; the execution module is specifically configured to fill a data part in the first function trampoline with the second address, to obtain the third jump instruction; and the execution module is specifically configured to: fill the q null bytes with an offset between the first address and the third address; and after the q null bytes are filled with the offset between the first address and the third address, replace the exception instruction operation code of the p bytes with a jump instruction operation code of the p bytes, to obtain the second jump instruction. In this way, finally, the exception instruction operation code is modified to the jump instruction operation code, so that it can be ensured that no jump error occurs. If the exception instruction operation code is first modified to the jump instruction operation code, and then the q null bytes are filled with the offset between the first address and the third address, before the q null bytes are filled with the offset between the first address and the third address, if another thread accesses the original function, a jump is directly made based on the jump instruction, and consequently an access error occurs.

With reference to the second aspect, in a possible implementation, the execution module is specifically configured to: when the offset between the first address and the second address is greater than the preset offset, determine the first function trampoline in an idle state from a plurality of function trampolines; and when the first function trampoline has not been used, modify the instruction in the first function trampoline based on the second address, to obtain the third jump instruction; or when the first function trampoline has been previously used, wait until duration for which the first function trampoline is not occupied exceeds first duration, and then modify the instruction in the first function trampoline based on the second address, to obtain the third jump instruction. In this way, a function trampoline may be allocated to the original function. There are different allocation manners for different types of trampolines.

With reference to the second aspect, in a possible implementation, the obtaining module is further configured to: obtain a second patch function, and store the second patch function in the patch area, where the second patch function is used to modify the first original function in the program, and an address of the second patch function is a fourth address; and the execution module is further configured to modify the data part in the first function trampoline to the fourth address, to obtain a fourth jump instruction, where the fourth jump instruction is used to jump to the patch area when being executed by the thread, to execute an instruction in the second patch function. In this way, when a same function is repeatedly patched, there is no need to reconstruct a jump instruction or repeatedly construct an instruction in a function trampoline, and only a data part in the function trampoline needs to be modified, thereby reducing operation steps.

With reference to the second aspect, in a possible implementation, the execution module is further configured to: when a storage address of the address of the first patch function is not capable of being read into a cache line, add a null byte before the storage address of the address of the first patch function, to change the storage address of the address of the first patch function, where a storage address that is of the address of the first patch function and that is obtained after the change is in a same cache line when being read into a cache. In this way, it can be ensured that a patch function address can be written into a same cache line at a time, to avoid an access error.

With reference to the second aspect, in a possible implementation, the patch module is further configured to: when a first thread accesses the exception instruction inserted into the first original function, suspend execution of the instruction in the first original function by the first thread; and the execution module is further configured to: after the exception instruction is modified to the jump instruction based on the offset between the first address and the second address, wake up the first thread to jump to the patch area by using the jump instruction, to execute the instruction in the first patch function. In this way, before the jump instruction is completely modified, the thread accessing the original function is suspended. After the jump instruction is completely modified, the suspended thread is woken up to jump to the patch area by using the jump instruction, to execute the patch function.

With reference to the second aspect, in a possible implementation, the execution module is further configured to: after the exception instruction is modified to the jump instruction based on the offset between the first address and the second address, when a second thread accesses the jump instruction inserted into the first original function, control the second thread to jump to the patch area by using the jump instruction, to execute the instruction in the first patch function. After the jump instruction is completely modified, the thread accessing the original function directly jumps to the patch area by using the jump instruction, to execute the patch function.

According to a third aspect, this application provides a computer-readable storage medium, configured to store computer instructions. When the computer instructions are run on a patch execution apparatus, the patch execution apparatus is enabled to perform the patch execution method provided in any possible implementation of the first aspect.

According to a fourth aspect, this application provides a computer program product. When the computer program product is run on a patch execution apparatus, the patch execution apparatus is enabled to perform the patch execution method provided in any possible implementation of the first aspect.

For beneficial effects of the third aspect and the fourth aspect, refer to the descriptions of the beneficial effects in the first aspect. Details are not described herein again in this application.

## BRIEF DESCRIPTION OF DRAWINGS

FIG. 1 is a diagram of inserting a jump instruction according to an embodiment of this application;
FIG. 2 is a diagram of a software architecture according to an embodiment of this application;
FIG. 3 is a diagram of a system architecture of a patch execution method according to an embodiment of this application;
FIG. 4(a), FIG. 4(b), and FIG. 4(c) are a diagram of inserting a nopl instruction into a function header of an original function according to an embodiment of this application;
FIG. 5 is a diagram of modifying a nopl instruction to an exception instruction according to an embodiment of this application;
FIG. 6 is a diagram of a method for modifying an exception instruction to a jump instruction according to an embodiment of this application;
FIG. 7 is a diagram of modifying an exception instruction to a jump instruction according to an embodiment of this application;
FIG. 8 is another diagram of modifying an exception instruction to a jump instruction according to an embodiment of this application;
FIG. 9 is a diagram of a function trampoline segment according to an embodiment of this application;
FIG. 10 to FIG. 12 are a group of diagrams of allocating a trampoline according to an embodiment of this application;
FIG. 13 is a diagram of inserting a function trampoline into a bin file/so file according to an embodiment of this application;
FIG. 14A and FIG. 14B are diagrams of obtaining a third jump instruction according to an embodiment of this application;
FIG. 15 is a diagram of code implementation of an original function, a patch function, and an original function obtained after the patch function is deleted according to an embodiment of this application;
FIG. 16A and FIG. 16B are a schematic flowchart of a patch execution method according to this application;
FIG. 17 is a schematic flowchart of another patch execution method according to this application;
FIG. 18 is a diagram of a patch execution apparatus according to this application; and
FIG. 19 is a diagram of an apparatus 1900 according to an embodiment of this application.

## DESCRIPTION OF EMBODIMENTS

The following clearly and completely describes technical solutions in embodiments of this application with reference to the accompanying drawings. In descriptions of embodiments of this application, unless otherwise specified, "/" indicates "or". For example, A/B may indicate A or B. The term "and/or" in this specification merely describes an association relationship for describing associated objects, and indicates that three relationships may exist. For example, A and/or B may indicate the following three cases: Only A exists, both A and B exist, and only B exists. In addition, in the descriptions of embodiments of this application, "a plurality of" means two or more.

The following terms "first" and "second" are merely intended for a purpose of description, and shall not be understood as an indication or implication of relative importance or an implicit indication of a quantity of indicated technical features. Therefore, a feature limited by "first" and "second" may explicitly or implicitly include one or more features. In the descriptions of embodiments of this application, unless otherwise specified, "a plurality of" means two or more.

Technical terms in this application are first explained.

1. Program

The program is a running activity about a data set. The program is also a basis of an operating system structure, and an application program in a computer is run by a process. The program may include one or more functions, and different functions may implement different functions. A plurality of functions may work together to implement a preset function of the program.

However, a defect may occur in a running process of the program. For example, if a function cannot implement an expected function, the function needs to be modified, so that a modified function can implement the expected function. For example, if a preset function of a function A in the program is to implement a multiplication operation, and in the running process of the program, it is found that an actual function of the function A is to implement an addition operation, the function A needs to be modified, so that the function A can implement the multiplication operation.

2. Original function and patch function

It may be learned from the foregoing descriptions of the concept of the program that the program may include one or more functions. Some functions can implement an expected function, while some functions cannot implement an expected function. The function that cannot implement the expected function in the program may be referred to as an original function. The original function that cannot implement the expected function needs to be modified. In this case, a programmer may rewrite the function based on the expected function that needs to be implemented. The rewritten function that can implement the expected function may be referred to as a patch function. For example, the foregoing function A for implementing the addition operation is the original function, while the rewritten function for implementing the multiplication operation is the patch function.

The patch function may be used to replace the original function that cannot implement the expected function in the program, to fix a defect in the program, so that one or more functions that can implement the expected function and the patch function can work together to implement a preset function of the program.

In embodiments of this application, a file including the patch function may be referred to as a patch file.

3. Patch area and critical section

After a patch file is obtained based on a defect in a program, the patch file may be stored in a memory area. The memory area used to store the patch file may be referred to as the patch area. After the patch file is loaded to the patch area, a system automatically allocates an address to the patch file. Different patch files have different addresses. During running of the program, the program may obtain the correct patch file from the patch area based on the address, and load and run the patch file, to fix the defect in the program.

It may be learned from the foregoing descriptions of the original function and the patch function that the patch function is used to replace an original function that cannot implement an expected function in a program. In an execution process of the program, when execution advances to the original function, the original function needs to be skipped, and a jump to the patch area needs to be made to execute a patch function in the patch file. After execution of the patch file is completed, a jump back to the program is made to continue to execute a next function. This process may be referred to as patching. To make a jump from the original function to the patch file, a jump instruction needs to be inserted into a function header of the original function. The jump instruction is used to enable the program to automatically skip the original function and jump to the patch area to execute the patch function in the patch file. In the program, an area into which the jump instruction is inserted may be referred to as the critical section.

4. Function trampoline segment and function trampoline

It may be learned from the foregoing descriptions that a jump instruction needs to be inserted into a function header of an original function, so that a program can jump to a patch area to execute a patch function in a patch file.

An instruction-based jump is limited by a distance. When an offset between an address of the jump instruction and an address of the patch file in the patch area is less than or equal to a preset offset, based on the instruction, a normal jump to the patch area can be made and the patch function in the patch file can be executed.

When an offset between an address of the jump instruction and an address of the patch file in the patch area is greater than a preset offset, based on the instruction, a jump error occurs and a jump to the patch area cannot be made.

To resolve a jump error caused due to an excessively long jump distance, an intermediate jump area may be introduced. Based on the jump instruction, a jump to the intermediate jump area may be first made, and then a jump from the intermediate jump area to the patch area may be made. In this way, a distance of one jump made based on the jump instruction can be shortened. Herein, the intermediate jump area may be referred to as the function trampoline.

There may be a plurality of function trampolines in a system, to make simultaneous jumps based on a plurality of jump instructions. The function trampoline may be obtained by dividing the function trampoline segment. One function trampoline segment may be divided into several function trampolines, and different function trampolines have different addresses. The function trampoline segment may be a special segment in an ELF file.

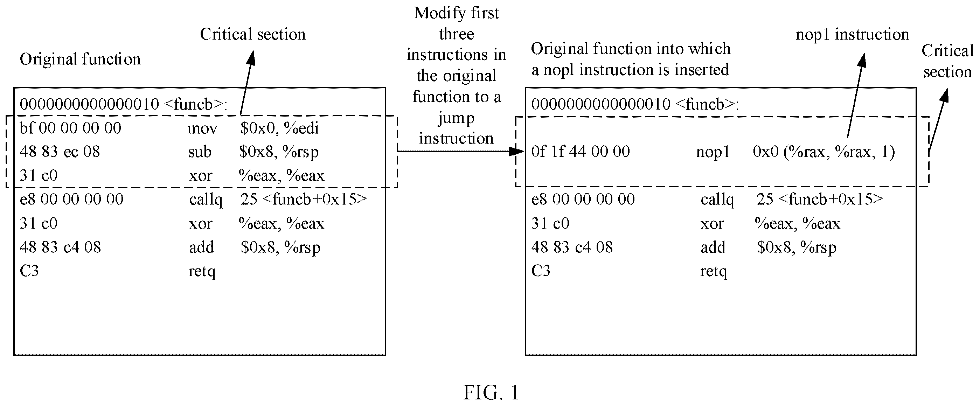

FIG. 1 is a diagram of inserting a jump instruction.

As shown in FIG. 1, an original function may include a plurality of instructions, and byte quantities of the instructions may be the same or different. For example, a first instruction in the original function is 1 byte, a second instruction in the original function is 2 bytes, a third instruction in the original function is 2 bytes, a fourth instruction in the original function is 3 bytes, a fifth instruction in the original function is 1 byte, a sixth instruction in the original function is 2 bytes, and a seventh instruction in the original function is 1 byte.

The original function cannot implement an expected function. Therefore, when the original function is executed, the original function needs to be skipped, and a patch function in a patch area needs to be executed to implement the expected function. In this case, a jump instruction needs to be inserted to make a function jump. It is assumed that a byte quantity of the jump instruction is 5 bytes.

As shown in FIG. 1, to insert a 5-byte nopl instruction, a plurality of instructions including at least 5 bytes may be counted starting from the first instruction in the original function, and are used as an insertion area of the nopl instruction. The first instruction in the original function, the second instruction in the original function, and the third instruction in the original function are exactly 5 bytes. In this case, the first instruction in the original function, the second instruction in the original function, and the third instruction in the original function may be used as a critical section, and the three instructions are modified to the nopl instruction. After a jump destination is determined, the nopl instruction is modified to the jump instruction. An area in which the first instruction in the original function, the second instruction in the original function, and the third instruction in the original function are located may also be referred to as a critical section. During patch activation, if another thread accesses an instruction in the critical section, there is a case in which the instruction in the critical section is modified halfway, and an error is reported when the instruction that is modified halfway is accessed. For example, when the second instruction in the original function is being modified, if another thread invokes the second instruction in the original function when the second instruction in the original function is modified halfway, an access error occurs because the second instruction in the original function is not a complete instruction. Therefore, during patching, there should be no other process that can access the instruction in the critical section.

To query whether there is another thread accessing the instruction in the critical section, there is a need to trap into an operating system kernel to make a query by using a kernel mechanism. If it is found, during n consecutive queries, that there is another thread accessing the instruction in the critical section, the patch activation fails and ends. If it is found, during n consecutive queries, that there is no other thread accessing the instruction in the critical section, the patch activation may continue to be performed.

However, to trap into the operating system kernel to query, by using the kernel mechanism, whether there is another thread accessing the instruction in the critical section, application software in which a current patched program is located needs to have permission to access a current operating system. For example, if the current operating system and the application software in which the current patched program is located are not developed by a same manufacturer, the current operating system may be referred to as a third-party operating system relative to the application software in which the current patched program is located.

If the application software in which the current patched program is located has no permission to access the current operating system, the application software in which the current patched program is located cannot trap into the kernel to query whether there is another thread accessing the instruction in the critical section. Consequently, no patching can be performed and patching fails.

Based on this, to ensure that a patch can be normally executed and successfully activated when application software in which a patched program is located has no permission to access a current operating system, this application provides a patch execution method. The method includes the following steps.

Step 1: Determine a to-be-patched original function in a program, and insert a nopl instruction before a first instruction in the original function.

Step 2: First modify the nopl instruction to an exception instruction. In this way, all threads accessing the original function are suspended and are in a to-be-executed state. For example, a first thread is suspended and is in the to-be-executed state.

Step 3: Load a patch function to a patch area, and allocate an address to the patch function.

Step 4: Calculate an offset between an address of the original function and the address of the patch function, and modify the exception instruction to a jump instruction based on the offset between the address of the original function and the address of the patch function. Then, the first thread may be woken up, and the first thread may jump to the patch function by using the jump instruction, and execute the patch function.

In some embodiments, there is an upper limit for a jump distance of the jump function. If the upper limit is exceeded, a jump failure occurs. In this case, before the exception instruction is modified to the jump instruction, it needs to be determined whether the offset between the address of the original function and the address of the patch function exceeds a preset offset.

When the offset between the address of the original function and the address of the patch function is less than or equal to the preset offset, a jump from the original function to the patch function may be directly made, and the exception instruction may be modified based on the offset between the address of the original function and an address of a function trampoline, to obtain a first jump instruction. Then, the first thread may be woken up, and the first thread may jump to the patch function by using the first jump instruction, and execute the patch function.

When the offset between the address of the original function and the address of the patch function is greater than the preset offset, a direct jump from the original function to the patch function cannot be made. In this case, an intermediate jump area (which may also be referred to as a function trampoline) may be used, the exception instruction may be modified based on an offset between the address of the original function and an address of the function trampoline, to obtain a second jump instruction, and an instruction in the function trampoline may be modified based on the address of the patch function, to obtain a third jump instruction. Then, the first thread may be woken up, and the first thread may jump to the function trampoline by using the second jump instruction. Then, the first thread jumps to the patch function based on the third jump instruction, and executes the patch function.

In step 4, the suspended thread may be woken up to jump to the patch function by using the foregoing method, and execute the patch function.

According to this application, in a first aspect, a defect in a to-be-patched original function in a program can be fixed by using a patch function. In a second aspect, the program can be patched without restarting the program, thereby improving program execution efficiency and patching efficiency. In a third aspect, in this application, a nopl instruction is inserted into a function header of the original function. In this case, the nopl instruction is a critical section. In step 2, the nopl instruction is modified to the exception instruction. In this way, all the threads accessing the original function first access the exception instruction, and therefore all these threads are suspended. There is no thread accessing an instruction in the critical section, and therefore there is no need to trap into an operating system kernel to find whether there is a thread accessing the instruction in the critical section. In other words, the patch execution method provided in this application does not depend on the kernel. Even if application software in which the program is located has no permission to access a current operating system, that is, the current operating system is a third-party operating system, the program can still be patched.

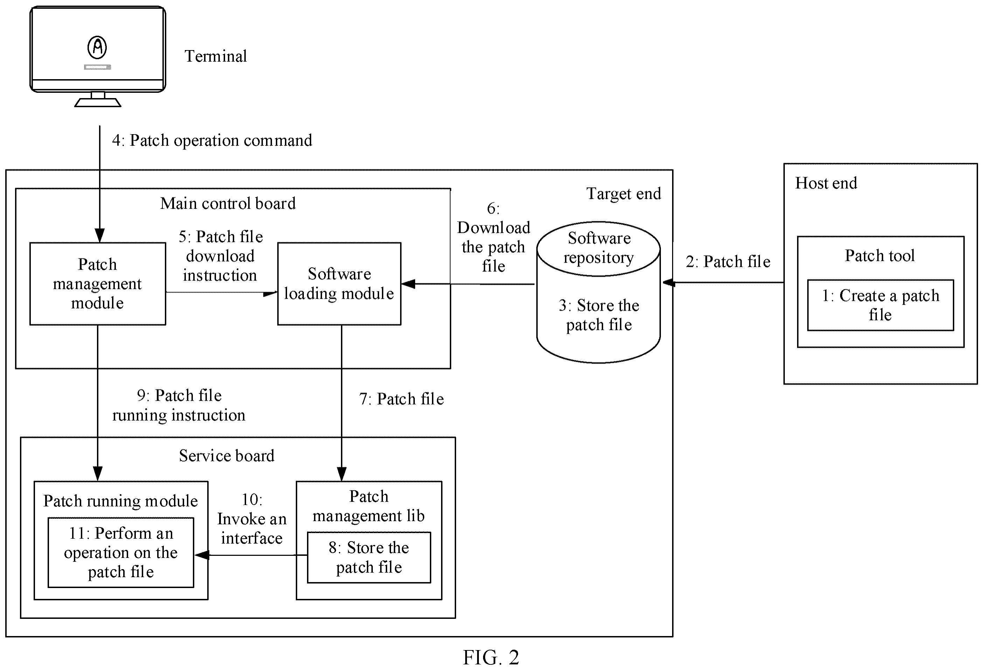

FIG. 2 is a diagram of a software architecture according to this application.

Program code (which may be referred to as a patch management lib) of the patch execution method in this application may be deployed at an upper layer of an operating system.

In a possible implementation, as shown in FIG. 2, the patch management lib may be deployed in application software. In this case, the application software may patch a program in the application software based on the patch management lib preset in the application software and by using the method provided in this application, to fix a defect in the program in the application software.

In another possible implementation, the patch management lib may not be deployed in the application software, and the patch management lib may be an independent functional module. When the application software needs to patch a program in the application software by using the method provided in this application, the application software may patch the program in the application software by invoking the patch management lib through an interface and by using the method provided in this application, to fix a defect in the program in the application software.

The patch management lib may include functions such as patch function loading, patch function activation, and patch function deletion.

The patch execution method provided in this application does not need to depend on an operating system kernel. Therefore, an operating system in which the application software is located may be a third-party operating system (third-party OS). Alternatively, an operating system in which the application software is located may be a third-party containers as a service (containers as a service, CaaS), and the third-party CaaS may also be referred to as a third-party virtual operating system. The third-party virtual operating system is similar to the third-party operating system in that the application software has no permission to access a kernel of the third-party virtual operating system. This application is also applicable to a non-third-party OS and a non-third-party CaaS.

A hardware layer may include a central processing unit (central processing unit, CPU), a read-only memory (read-only memory, ROM), a random access memory (random access memory, RAM), a MIPS, and the like.

The CPU may be configured to fix a defect in a program based on the patch management lib. The ROM and the RAM may be configured to store data such as a patch function.

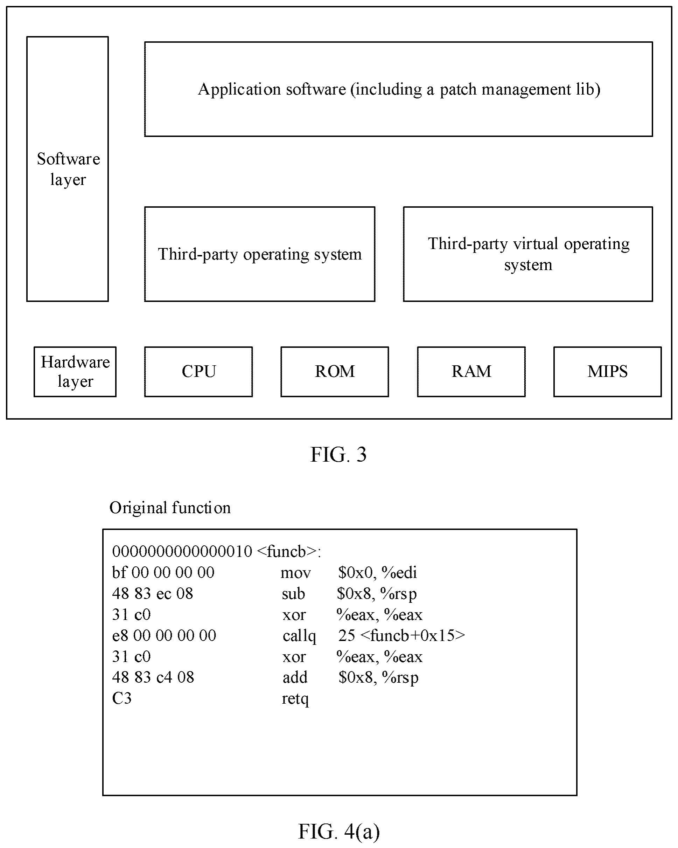

FIG. 3 is a diagram of a system architecture of a patch execution method according to this application.

As shown in FIG. 3, the system may include a host end and a target end.

The host end includes a patch tool. The patch tool is configured to obtain a patch file based on a defect in a program. The patch file is used to fix the defect in the program. Specifically, code may be modified based on the defect in the program, and information such as a modified code function, a newly added code function, and a data structure is extracted and placed in an independent file, and compiled to generate a corresponding OBJ file. The patch file and a new global symbol information file are generated based on a global symbol information file of the original software code and the OBJ file by using the patch tool.

The target end includes a main control board, a service board, and a software repository. The main control board, the service board, and the software repository may be understood as software modules.

The software repository is used to store the patch file. After the patch tool generates the patch file, the host end may send the patch file to the software repository, so that the software repository can store the patch file. Alternatively, a user may store, in the software repository by performing a system operation, the patch file generated by the host end. A plurality of different patch files may be stored in the software repository.

The main control board may include a patch management module and a software loading module. The service board may include a patch running module and a patch management lib.

A terminal may send a patch operation command to the patch management module. The patch operation command is used to request to fix the defect in the program based on a patch function. For example, the patch file is downloaded, or the patch file is downloaded to the service board.

After the patch management module receives the patch operation command sent by the terminal, the patch management module parses the patch operation command, and sends a patch file download instruction to the software loading module.

After the software loading module receives the patch file download instruction, in response to the patch file download instruction, the software loading module may download the patch file from the software repository, and send the patch file to the patch management lib. The patch management lib may store the patch file in a patch area. Then, during patching, the patch file may be obtained from the patch management lib, and an interface may be invoked to perform a patching operation.

The patch management module is further configured to send a patch file running instruction to the patch running module. The patch file running instruction indicates the patch running module to perform the patching operation.

After the patch running module receives the patch file running instruction, in response to the patch file running instruction, the patch running module may invoke, through an interface, a capability and the patch file that are provided by the patch management lib, to patch the program, so as to fix the defect in the program.

How to insert a nopl instruction into a function header of an original function in this application is first described.

Before the nopl instruction is inserted, a defect in a program needs to be determined. The program may include a plurality of functions, and a to-be-patched original function may be determined based on the defect in the program.

It should be noted that one program may include a plurality of to-be-patched original functions. In this application, only one to-be-patched original function is used as an example for description. This constitutes no limitation.

In FIG. 4(a), a diagram of program code of a to-be-patched original function is shown.

The original function includes a plurality of instructions. The instruction "bf 00 00 00 00 mov $0x0, %edi" is a first instruction in the original function.

After the original function is determined, a nopl instruction is inserted into a function header of the original function. That is, a nopl instruction is inserted before the first instruction in the function.

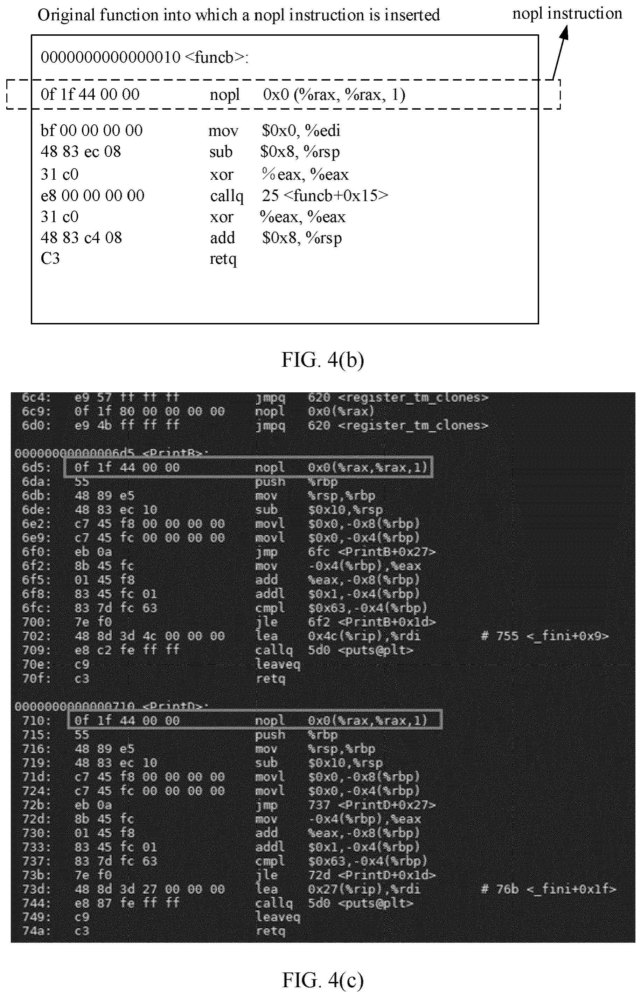

In FIG. 4(b), a diagram of program code of inserting a nopl instruction into a function header of an original function is shown.

For example, the nopl instruction may be "0x0f1 f440000". The nopl instruction is a no-operation instruction and does not affect a function of the function.

As shown in FIG. 4(b), in this application, a nopl instruction is inserted into the function header of the original function. In this case, the nopl instruction is a critical section. There is only one nopl instruction in the critical section.

For example, for an x86 CPU, a Spec file (x86_nop.spec) is designed as follows:

```
*invoke_as:
%{!fwpa*:%{fcompare-debug=*|fdump-final-insns=*:%:compare-debug-dump-
opt()}    %{!S:-o %|.s |
sed -i s/^\\\t.cfi_startproc$/&\\n\.byte\ 0xf,0x1f,0x44,0x0,0x0/g %m.s |
as %(asm_options) %m.s %A }    }
```

As shown in FIG. 4(c), a 5-byte nopl instruction is inserted into a function header in a compilation process by using a -specs=x86_nop.spec compilation option. The nopl instruction is shown in a box in FIG. 4(c).

To avoid a case in which another thread accesses the critical section in a patching process, the nopl instruction in the critical section needs to be modified to an exception instruction. When accessing the original function, another thread is directly suspended by the exception instruction and is in a to-be-executed state. After a jump instruction is ready, the suspended thread is woken up, so that the woken-up thread can access a patch function.

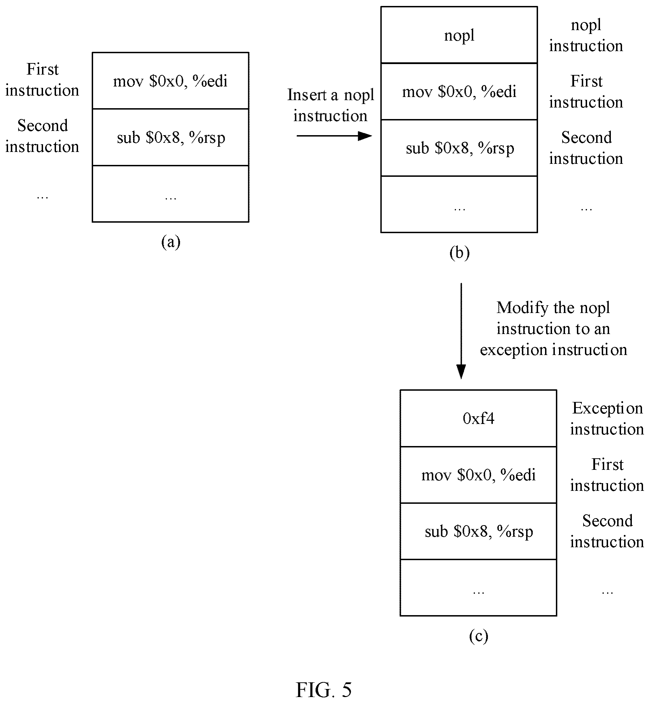

In (a) in FIG. 5, a diagram of an instruction set in an original function is shown. For example, a first instruction in the original function is "mov $0x0, %edi", and a second instruction in the original function is "sub $0x8, %rsp". The original function may further include more other instructions that are not shown in (a) in FIG. 5.

In (b) in FIG. 5, a diagram of an instruction set obtained after a nopl instruction is inserted into a function header of an original function is shown. As shown in (b) in FIG. 5, a nopl instruction may be inserted before the first instruction "mov $0x0, %edi".

When a patch function is loaded and activated, the nopl instruction may be modified to an exception instruction.

In (c) in FIG. 5, a diagram of an instruction set obtained after a nopl instruction is modified to an exception instruction is shown. For example, the exception instruction may be "0xf4".

In some embodiments, the nopl instruction may include m bytes. In this case, a critical section also includes m bytes. The m bytes in the nopl instruction are all null. When the nopl instruction is modified to the exception instruction, first p bytes in the critical section may be modified to the exception instruction, and the remaining q bytes in the critical section may be null, to facilitate subsequent filling with an operand of a jump instruction.

For example, m may be 5, p may be 1, and q may be 4. When the nopl instruction is inserted into the function header of the original function, a 5-byte null instruction may be inserted. When the nopl instruction is modified to the exception instruction, a first byte in the 5 null bytes in the critical section may be filled with the exception instruction. For example, the first byte in the 5 null bytes is filled with the oxf4 instruction. The last 4 bytes in the critical section are null, to facilitate subsequent filling with the operand of the jump instruction.

In this way, in this application, a nopl instruction is inserted into the function header of the original function. In this case, the nopl instruction is a critical section. The nopl instruction is modified to the exception instruction. In this case, there is only one exception instruction in the critical section. In this way, all threads accessing the original function first access the exception instruction, and therefore all these threads are suspended. There is no thread accessing an instruction in the critical section, and therefore there is no need to trap into an operating system kernel to find whether there is a thread accessing the instruction in the critical section. In other words, the patch execution method provided in this application does not depend on the kernel. Even if application software in which the program is located has no permission to access a current operating system, that is, the current operating system is a third-party operating system, the program can still be patched.

The application software may load and activate a patch function. After a jump instruction is ready, a suspended thread is woken up, so that the thread accessing an original function can jump to a patch area to execute the patch function. In this way, the thread runs the patch function to implement an expected function that cannot be implemented by the original function.

Before the suspended thread is woken up, to enable the thread to jump to the patch function, an exception instruction further needs to be modified to a jump instruction, so that the suspended thread can jump to the patch function by using the jump instruction.

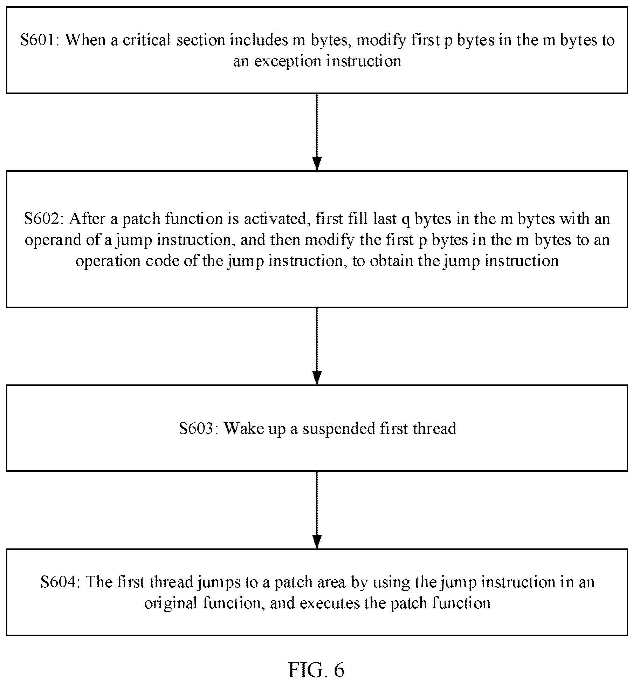

FIG. 6 is a diagram of a method for modifying an exception instruction to a jump instruction.

S601: When a critical section includes m bytes, modify first p bytes in the m bytes to an exception instruction.

When a patch function is loaded and activated, a nopl instruction may be modified to an exception instruction. In this way, in a process of activating the patch function, when another thread accesses the critical section, the thread in the critical section may be suspended. After the function is successfully activated, the suspended thread is activated, so that the reactivated thread can execute the patch function.

The nopl instruction inserted into a function header of an original function may include m bytes. In this case, the critical section also includes m bytes. The m bytes in the nopl instruction are all null. When the nopl instruction is modified to the exception instruction, the first p bytes in the critical section may be modified to the exception instruction, for example, the exception instruction may be an oxf4 instruction, and the remaining q bytes in the critical section may be null, to facilitate subsequent filling with an operand of a jump instruction.

For example, m may be 5, p may be 1, and q may be 4. When the nopl instruction is inserted into the function header of the original function, a 5-byte null instruction may be inserted. When the nopl instruction is modified to the exception instruction, a first byte in the 5 null bytes in the critical section may be filled with the exception instruction. For example, the first byte in the 5 null bytes is filled with the oxf4 instruction. The last 4 bytes in the critical section are null, to facilitate subsequent filling with the operand of the jump instruction.

S602: After the patch function is activated, first fill the last q bytes in the m bytes with the operand of the jump instruction, and then modify the first p bytes in the m bytes to an operation code of the jump instruction, to obtain the jump instruction.

The operand of the jump instruction may also be referred to as a jump distance of the jump instruction. The jump distance of the jump instruction may be obtained by subtracting an original address of the jump instruction from a destination address of the jump instruction.

For example, the original address of the jump instruction may be an address of the original function. The destination address of the jump instruction may be an address of the patch function.

In some embodiments, there is an upper limit for the jump distance of the jump instruction. If the jump distance exceeds the upper limit, a jump failure occurs. To resolve a jump error caused due to an excessively long jump distance of the jump instruction, a function trampoline may be introduced. Based on the jump instruction, a jump to the function trampoline may be first made, and then a jump from the function trampoline to the patch area may be made. In this way, a distance of one jump made based on the jump instruction can be shortened.

In some embodiments, there may be a plurality of original functions, and one function trampoline may need to be allocated to each of the plurality of original functions. Different function trampolines are used for different original functions.

In this case, before the exception instruction is modified to the jump instruction, it needs to be determined whether an offset between the address of the original function and the address of the patch function exceeds a preset offset.

When the offset between the address of the original function and the address of the patch function is less than or equal to the preset offset, a direct jump from the original function to the patch function may be made, and the operand that is of the jump instruction and with which the last q bytes are to be filled may be the offset between the address of the original function and the address of the patch function. Herein, the operation code in the first p bytes and the operand in the last q bytes may be referred to as a first jump instruction.

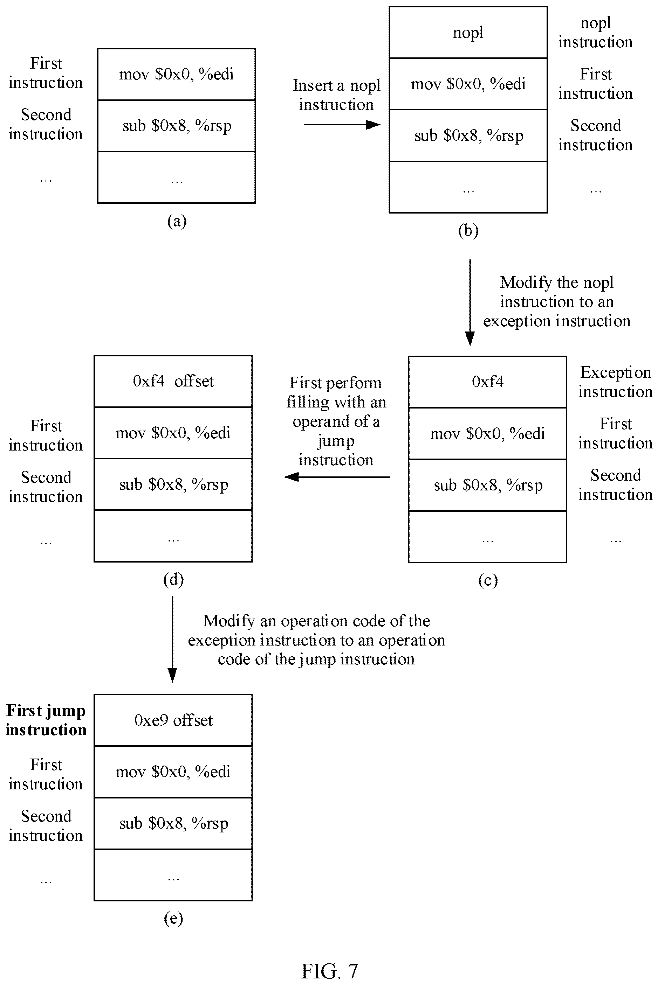

FIG. 7 is a diagram of modifying an exception instruction to a jump instruction.

For descriptions of (a) in FIG. 7, (b) in FIG. 7, and (c) in FIG. 7, refer to the descriptions of (a) in FIG. 5, (b) in FIG. 5, and (c) in FIG. 5.

When the offset between the address of the original function and the address of the patch function is less than or equal to the preset offset, after the operand that is of the jump instruction and with which the last q bytes are to be filled is determined, as shown in (d) in FIG. 7, the last q bytes in the critical section may be filled with the operand, and the operand may be represented as "offset". Then, an operation code of the exception instruction in the first p bytes in the critical section is replaced with the operation code of the jump instruction, and the operation code of the jump instruction may be represented as "0xe9".

As shown in (e) in FIG. 7, the operation code of the jump instruction in the first p bytes in the critical section and the operand of the jump instruction in the last q bytes in the critical section may be collectively referred to as the first jump instruction. The first jump instruction is used to directly jump to the patch area to execute the patch function.

Optionally, when the first jump instruction is constructed, the operand of the jump instruction in the last q bytes in the critical section also needs to be first modified. Finally, the exception instruction in the first p bytes in the critical section is modified and replaced with the operation code of the jump instruction. If the operation code is modified before the operand, there is no exception instruction in the critical section. In this case, if another thread accesses the critical section, the another thread is not suspended. However, in this case, filling with an operand of the first jump instruction is not completed, and the another thread cannot jump. Consequently, a jump failure occurs. Based on this, the operand of the jump instruction in the last q bytes in the critical section may be first modified, and finally, the exception instruction in the first p bytes in the critical section is modified and replaced with the operation code of the jump instruction.

When the offset between the address of the original function and the address of the patch function is greater than the preset offset, a direct jump from the original function to the patch function cannot be made. In this case, a function trampoline may be introduced, a function trampoline is allocated to the original function, and an address of the function trampoline is determined. The operand that is of the jump instruction and with which the last q bytes are to be filled may be an offset between the address of the original function and the address of the function trampoline. Herein, the operation code in the first p bytes and the operand in the last q bytes may be referred to as a second jump instruction.

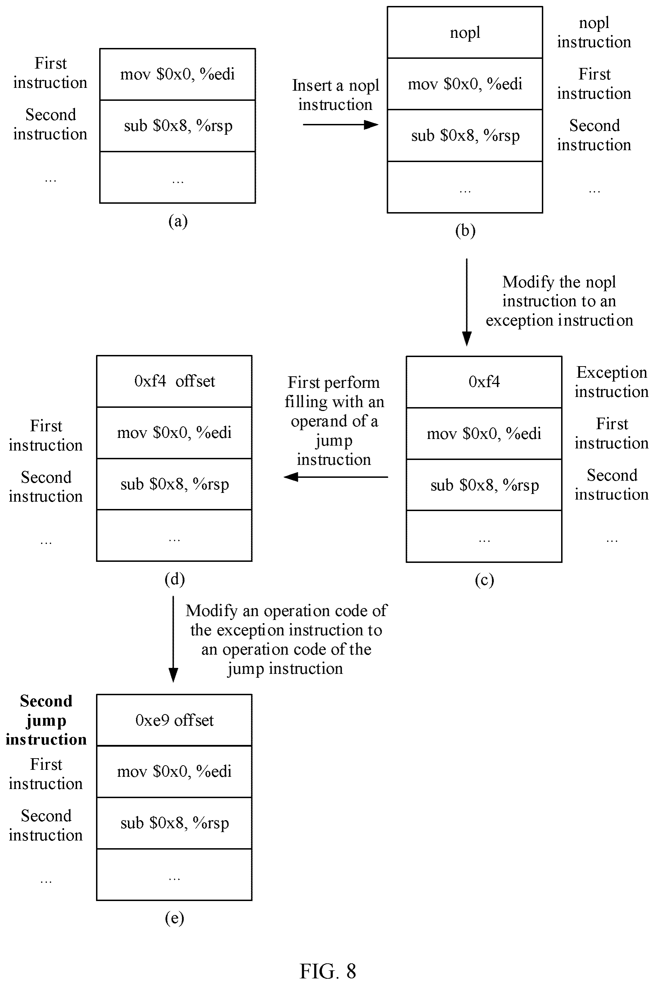

FIG. 8 is another diagram of modifying an exception instruction to a jump instruction.

FIG. 8 is similar to FIG. 7. For descriptions of (a) in FIG. 8, (b) in FIG. 8, and (c) in FIG. 8, refer to the descriptions of (a) in FIG. 7, (b) in FIG. 7, and (c) in FIG. 7. A difference lies in that the operand with which the last q bytes in the critical section are filled in (d) in FIG. 8 is different from the operand with which the last q bytes in the critical section are filled in (d) in FIG. 7. In (d) in FIG. 8, the operand with which the last q bytes in the critical section are filled is the offset between the address of the original function and the address of the function trampoline. In (d) in FIG. 7, the operand with which the last q bytes in the critical section are filled is the offset between the address of the original function and the address of the patch function. In (e) in FIG. 8, the operation code of the jump instruction in the first p bytes in the critical section and the operand of the jump instruction in the last q bytes in the critical section may be collectively referred to as the second jump instruction. The second jump instruction is used to jump to the function trampoline allocated to the original function.

Optionally, when the second jump instruction is constructed, the operand of the jump instruction in the last q bytes in the critical section also needs to be first modified. Finally, the exception instruction in the first p bytes in the critical section is modified and replaced with the operation code of the jump instruction. If the operation code is modified before the operand, there is no exception instruction in the critical section. In this case, if another thread accesses the critical section, the another thread is not suspended. However, in this case, filling with an operand of the second jump instruction is not completed, and the another thread cannot jump. Consequently, a jump failure occurs. Based on this, the operand of the jump instruction in the last q bytes in the critical section may be first modified, and finally, the exception instruction in the first p bytes in the critical section is modified and replaced with the operation code of the jump instruction.

How to allocate a function trampoline to an original function is described below.

First, a function trampoline segment may be divided into n function trampolines with a same size. In addition, the n function trampolines are numbered, and different function trampolines have different numbers.

The function trampolines may be classified into two types: a function trampoline in a full state and a function trampoline in a non-full state. The function trampoline in the full state may mean that the function trampoline has been used at least once by an original function. The function trampoline in the non-full state may mean that the function trampoline has not been used by any original function.

The function trampoline in the full state may be further classified into two use states: an idle state and an occupied state.

The function trampoline in the non-full state may also be classified into two use states: an idle state and an occupied state.

The idle state may mean that the function trampoline in the full state or the function trampoline in the non-full state is not currently occupied by any original function. The occupied state may mean that the function trampoline in the full state or the function trampoline in the non-full state is currently occupied by an original function.

For example, n may be 6.

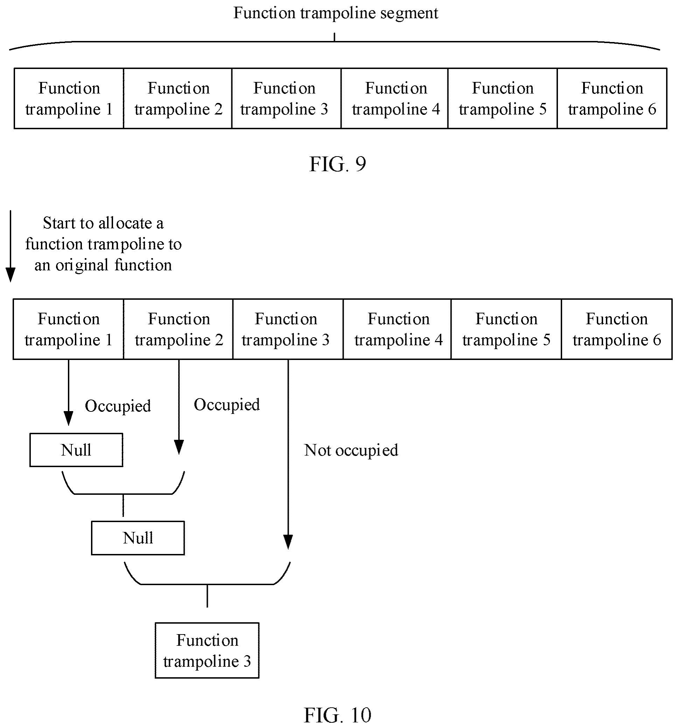

FIG. 9 is a diagram of a function trampoline segment.

The function trampoline segment includes a function trampoline 1, a function trampoline 2, a function trampoline 3, a function trampoline 4, a function trampoline 5, and a function trampoline 6.

Alternatively, there may be a plurality of function trampoline segments. This is not limited in this application.

This application provides but is not limited to the following two manners of allocating a function trampoline to an original function.

Manner 1: When the function trampoline is allocated to the original function, traversal starts from the function trampoline 1. A use status of the function trampoline 1 is determined. If the use status of the function trampoline 1 is the idle state, a type of the function trampoline 1 is then determined. If the type of the function trampoline 1 is the function trampoline in the non-full state, the function trampoline 1 may be directly allocated to the original function for use. If the type of the function trampoline 1 is the function trampoline in the full state, there is a need to wait for a period of time. If the function trampoline 1 is not occupied in the period of time, the function trampoline 1 may be allocated to the original function for use. A purpose of waiting for a period of time is as follows: Although the function trampoline in the full state is not occupied, the function trampoline may continue to be accessed by another thread, and the another thread may further jump to the patch area by using the function trampoline 1 to execute the to-be-unloaded patch function. Therefore, there is a need to wait for a period of time, and when it is determined that the function trampoline in the full state is not accessed by another thread, the patch function is unloaded, and the function trampoline in the full state is allocated to the original function for use. This avoids a case in which another thread accesses the to-be-unloaded patch function by using the function trampoline in the full state, and directly modifies a data part in the function trampoline in the full state, and consequently an access error occurs in the another thread.

If allocation of the function trampoline 1 fails, the function trampoline 2 may be then traversed, and the function trampoline 2 is allocated to the original function for use in a manner of the function trampoline 1.

As shown in FIG. 10, in the foregoing manner, all the function trampolines are sequentially traversed in a front-to-back sequence, and traversal is stopped after an available function trampoline is allocated to the original function. For example, the function trampoline allocated to the original function may be the function trampoline 3. The function trampoline 3 may be a function trampoline in a full state, or the function trampoline 3 may be a function trampoline in a non-full state.

In some embodiments, if all the function trampolines are traversed and no function trampoline is successfully allocated, traversal may be repeatedly performed for r times. If traversal is performed for r consecutive times and no function trampoline is successfully allocated, the allocation fails. In this case, a user may reactivate the patch function and then allocate the function trampoline based on the foregoing steps.

Manner 2: When no function trampoline in the function trampoline segment is allocated, a traversal index uiCurPos is set to 0. The traversal index uiCurPos is defined as a start location at which the function trampoline is traversed. When a function trampoline in the function trampoline segment is allocated, the traversal index uiCurPos is increased by 1. When the traversal index uiCurPos exceeds n-1, a value of 0 is assigned to the traversal index uiCurPos again.

When the function trampoline segment is not full, it indicates that there is a function trampoline in a non-full state in the function trampoline segment. If the traversal index uiCurPos is s, and s is less than n-1, it indicates that function trampolines between a function trampoline s+1 and a function trampoline n-1 are all function trampolines in a non-full state. In this case, the function trampoline s+1 may be directly allocated to the original function for use. In addition, the traversal index uiCurPos is increased by 1, and the traversal index uiCurPos is s+1.

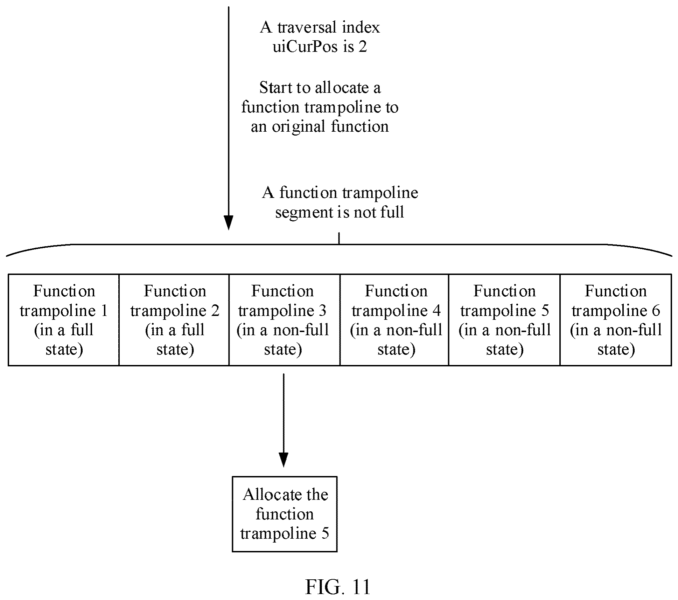

As shown in FIG. 11, in the foregoing manner, if the traversal index uiCurPos is 2, it indicates that the function trampoline 3 to the function trampoline 6 are all function trampolines in a non-full state, and the function trampoline 3 may be directly allocated to the original function for use.

When the function trampoline segment is full, it indicates that there is no function trampoline in a non-full state in the function trampoline segment, and all the function trampolines in the function trampoline segment are function trampolines in a full state. If the traversal index uiCurPos is s, the function trampoline is traversed starting from a function trampoline s+1 until a function trampoline n-1 is traversed. If a function trampoline between the function trampoline 1 and the function trampoline n-1 is successfully allocated, traversal ends. Otherwise, a value of 0 is assigned to the traversal index uiCurPos, and the function trampoline is traversed starting from the function trampoline 1 until the function trampoline n-1 is traversed.

When the function trampoline segment is full, and each function trampoline is traversed, if the function trampoline is in an idle state, there is a need to wait for a period, and the function trampoline is allocated to the original function for use when it is ensured that the function trampoline is not accessed by another thread.

In some embodiments, if all the function trampolines are traversed and no function trampoline is successfully allocated, traversal may be repeatedly performed for r times. If traversal is performed for r consecutive times and no function trampoline is successfully allocated, the allocation fails. In this case, a user may reactivate the patch function and then allocate the function trampoline based on the foregoing steps.

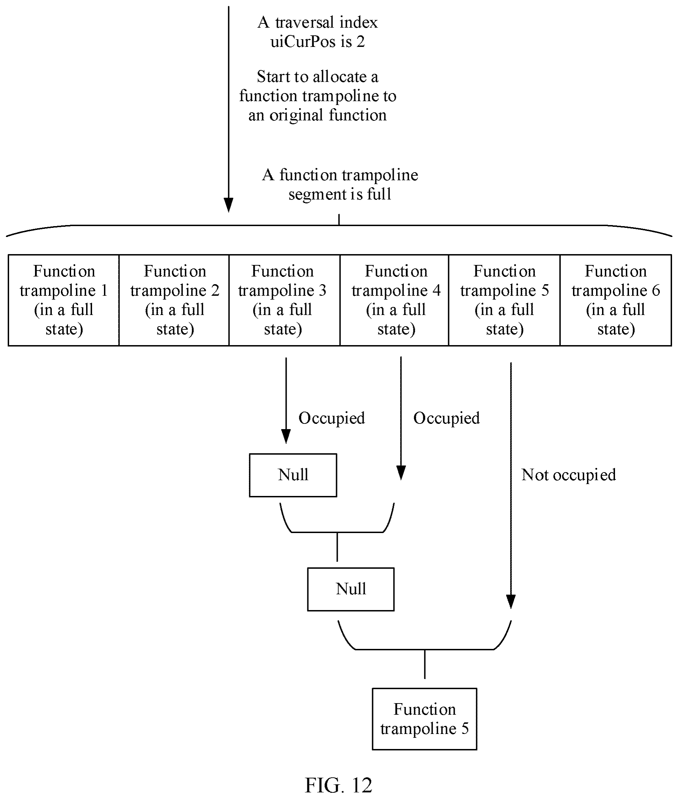

As shown in FIG. 12, in the foregoing manner, if the traversal index uiCurPos is 2, all the function trampolines are sequentially traversed starting from the function trampoline 3, and traversal is stopped after an available function trampoline is allocated to the original function. For example, the function trampoline allocated to the original function may be the function trampoline 5. The function trampoline 5 may be a function trampoline in a full state.

In addition to the foregoing two manners of allocating the function trampoline to the original function, the function trampoline may be allocated to the original function in another manner. This is not limited in this application.

After the function trampoline allocated to the original function is determined, an address of the function trampoline may be obtained.

For example, a linker option -Ttrampoline.lds may be added to a source code build project, and a trampoline is generated when each bin file/so file is linked. The following linker script (trampoline.lds) may be designed:

```
SECTIONS
        {
         .vos_patch_trampoline_seg ALIGN(4096) (NOLOAD):
         {
              PROVIDE (_YOS_PATCH_TRAMPOLINE_SEG_START_ADDR_ = .);
              . = . + 0x10000;
              PROVIDE (_VOS_PATCH_TRAMPOLINE_SEG_END_ADDR_ = .);
         }
        EXTERN(_VOS_PATCH_TRAMPOLINE_SEG_START_ADDR_,_VOS_PATC
H_TRAMPOLINE_SEG_END_ADDR_)
        INSERT BEFORE .bss;
```

Page alignment and a size of a function trampoline in the linker script may be adjusted based on an actual situation. For example, if the linker script is 4K aligned, the foregoing code segment may be filled with 4096. One function trampoline unit is 16 bytes. Therefore, a quantity of function trampolines is determined based on the size of the function trampoline.

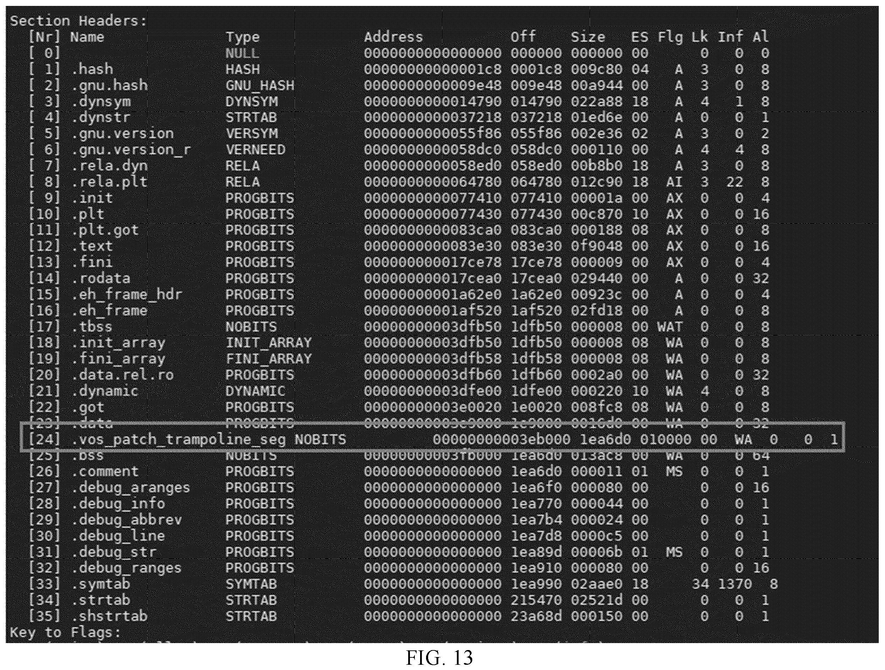

FIG. 13 is a diagram of inserting a function trampoline into a bin file/so file. Code implementation of inserting a function trampoline is shown in a box in FIG. 13.

S603: Wake up a suspended first thread.

S604: The first thread jumps to the patch area by using the jump instruction in the original function, and executes the patch function.

When the offset between the address of the original function and the address of the patch function is less than or equal to the preset offset, a direct jump from the original function to the patch function may be made. After the exception instruction is modified to the first jump instruction in the embodiment in FIG. 7, the first thread may jump to the patch area by using the first jump instruction in the original function, and execute the patch function. The first thread does not need to execute the original function, and the first thread can implement, by executing the patch function, an expected function that cannot be implemented by executing the original function.

After the first jump instruction is completely modified, for example, after the exception instruction in the first p bytes in the critical section is modified to the operation code of the jump instruction, the suspended first thread may be woken up. Then, the first thread may jump to the patch area, and execute the patch function. The first thread does not need to execute the original function, and the first thread can implement, by executing the patch function, an expected function that cannot be implemented by executing the original function.

When the offset between the address of the original function and the address of the patch function is greater than the preset offset, a direct jump from the original function to the patch function cannot be made. In this case, a function trampoline may be introduced, and a function trampoline is allocated to the original function.

Based on the descriptions in the embodiment in FIG. 8, the exception instruction is modified to the second jump instruction, and the thread may jump from the original function to the function trampoline. However, a jump from the function trampoline to the patch area to execute the patch function is further required. Therefore, before the first thread is woken up, a jump instruction in the function trampoline further needs to be constructed. The jump instruction in the function trampoline may be referred to as a third jump instruction.

How to construct a function trampoline is described below.

First, an instruction format of the function trampoline needs to be constructed.

The instruction format of the function trampoline is as follows:

$$0x0:$$

$$0x2:$$

$$0x8:$$

An instruction format of the function trampoline is shown above. The instruction format of the function trampoline may be constructed before patching, or may be constructed in a patching process. This is not limited in this application. The function trampoline may include three instructions. An address of a first instruction may be "0x0", an address of a second instruction may be "0x2", and an address of a third instruction may be "0x8". In some embodiments, the third instruction may be referred to as a data part in the function trampoline. The function trampoline may include 16 bytes. The first instruction may include 2 bytes, the second instruction may include 6 bytes, and the third instruction may include 8 bytes.

The first instruction is a blank instruction, and is used to pad a patch function address part, so that the patch function address part is aligned with a cache line. The second instruction is a jump instruction part in the function trampoline. The third instruction is a data part, for example, stores a patch function address.

A trampoline segment may be divided into several function trampolines with a size of 16 bytes. If a data part in the trampoline segment is page-aligned, a storage address of a data part in each function trampoline is definitely 16-byte aligned. Layout of the function trampoline is designed as follows: First 2 bytes are left blank, a jump instruction is 6 bytes, and a data part is 8 bytes. In this way, an address of the data part is 8-byte aligned (on 64-bit boundary). When the data part at the 8-byte aligned storage address is read or written, the 8-byte data part is in a same cache line, and may be written at a time.

In this way, the first instruction is a 2-byte blank part, so that the data part in the function trampoline is 8-byte aligned. For example, when writing data into a cache line (cache line), an x86 CPU writes data into the cache line on a basis of 8 bytes. The 8-byte data part in the function trampoline is aligned with 8 bytes in the cache line, so that it can be ensured that the patch function address is written into the cache line at a time, and a case in which the patch function address is written into the cache line at several times does not occur, thereby ensuring atomicity.

If the patch function address part in the function trampoline is not 8-byte aligned with the cache line, for example, there is no 2-byte blank instruction in the function trampoline, the 6-byte second instruction and a patch function address part in first 2 bytes in the third instruction are written into a cache line together, and a remaining 6-byte patch function address part in the third instruction is written into another cache line next time. In this case, the patch function address part in the third instruction is not written into the cache line together. For example, in a scenario in which a same original function is repeatedly patched, only a patch function address part in a function trampoline needs to be modified. After the patch function address part in the function trampoline is modified, the CPU needs to write the patch function address part in the function trampoline into the cache line. Before the remaining 6-byte patch function address part in the third instruction is written into the cache line, if another thread obtains the patch function address part that is in the first 2 bytes in the third instruction and that is first written into the cache line, and mistakenly considers the patch function address part in the 2 bytes as an address of a patch function, the another thread may access the patch function based on the patch function address part in the 2 bytes. However, the patch function address part in the 2 bytes is not an actual address part of the patch function. Therefore, an access error occurs. Based on this, a blank instruction needs to be added to the function trampoline, to ensure that the patch function address part written by the CPU into the cache line is 8-byte aligned.

It should be noted that a unit byte quantity, for example, 8 bytes, of the cache line is merely used as an example to explain this application, and constitutes no limitation. A specific quantity of blank bytes may be added based on an actual situation, to ensure that a start address of the data part in the function trampoline and an end address of the data part are in a same cache line, so that it can be ensured that the data part in the function trampoline can be written into a same cache line at a time.

For example, the unit byte quantity of the cache line is a first byte quantity, a byte quantity of the instruction address in the function trampoline may be a second byte quantity, and a byte quantity of the patch function address in the function trampoline may be a third byte quantity.

When the first byte quantity is an integer multiple of a sum of the second byte quantity and the third byte quantity, or a sum of the second byte quantity and the third byte quantity is an integer multiple of the first byte quantity or the second byte quantity, no blank instruction needs to be added to the function trampoline. In this case, it can be ensured that the patch function address of the third byte quantity is written into a cache at a time. For example, the first byte quantity is 16, the second byte quantity is 8, and the third byte quantity is also 8.

When the first byte quantity is not an integer multiple of a sum of the second byte quantity and the third byte quantity, a blank instruction needs to be added to the function trampoline, and a byte quantity of the blank instruction is a fourth byte quantity, so that the first byte quantity is an integer multiple of a sum of the second byte quantity, the third byte quantity, and the fourth byte quantity, or a sum of the second byte quantity, the third byte quantity, and the fourth byte quantity is an integer multiple of the first byte quantity. For example, the first byte quantity is 16, the second byte quantity is 6, and the third byte quantity is 8. In this case, a blank instruction of at least 2 bytes needs to be added to the function trampoline, or an 18-byte blank instruction, a 34-byte blank instruction, or the like may be added. This is not limited in this application.

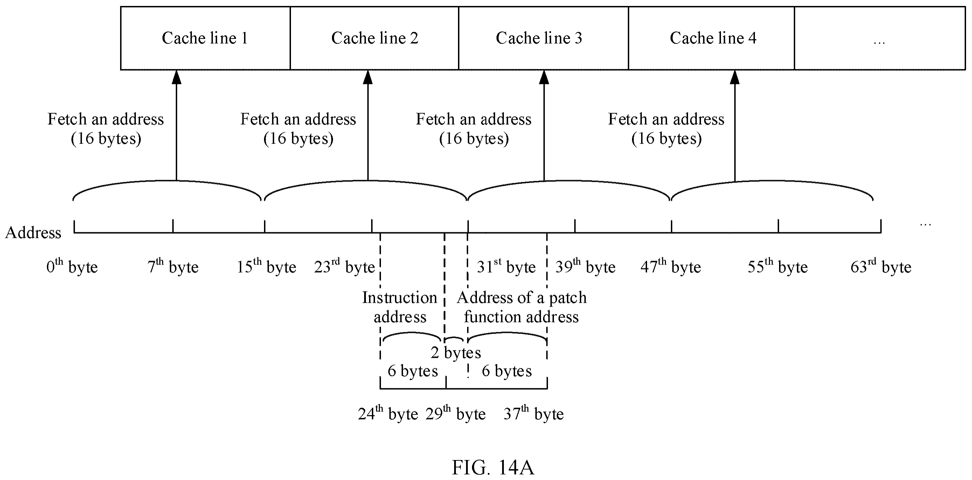

For example, as shown in FIG. 14A, the CPU fetches an address and writes the address into a cache line. A unit byte quantity of the cache line is the first byte quantity. For example, the first byte quantity may be 16.

The CPU sequentially fetches addresses based on the fixed first byte quantity and stores the addresses in the cache line. For example, the CPU may fetch a storage address in a $0^{th}$ byte to a storage address in a $15^{th}$ byte, namely, a total of 16 bytes of storage addresses, and store the storage addresses in a cache line 1; the CPU may fetch a storage address in a $16^{th}$ byte to a storage address in a $31^{st}$ byte, namely, a total of 16 bytes, and store the storage addresses in a cache line 2; the CPU may fetch a storage address in a $32^{nd}$ byte to a storage address in a $47^{th}$ byte, namely, a total of 16 bytes, and store the storage addresses in a cache line 3; and the CPU may fetch a storage address in a $48^{th}$ byte to a storage address in a $63^{rd}$ byte, namely, a total of 16 bytes, and store the storage addresses in a cache line 4. By analogy, the CPU may sequentially fetch addresses and store the addresses in the cache line.

For example, a storage address of the jump instruction in the function trampoline includes a total of 6 bytes, and the 6 bytes are located between a $24^{th}$ byte and a $29^{th}$ byte; and a storage address of the patch function address in the function trampoline includes a total of 8 bytes, and the 8 bytes are located between a $30^{th}$ byte and a $37^{th}$ byte.

As shown in FIG. 14A, when fetching an address for the second time, the CPU writes the 6-byte storage address of the jump instruction and first 2 bytes of the storage address of the patch function address into the cache line 2; and when fetching an address for the third time, the CPU writes the last 6 bytes of the storage address of the patch function address into the cache line 3. However, in this case, the storage address of the patch function address is written into different cache lines at two times, and an access error occurs.

Based on this, to ensure that the 8-byte storage address of the patch function address is written into one cache line at a time, a specific quantity of null bytes may be added before the storage address of the patch function address, so that the address part of the 8-byte patch function address can be written into one cache line at a time.

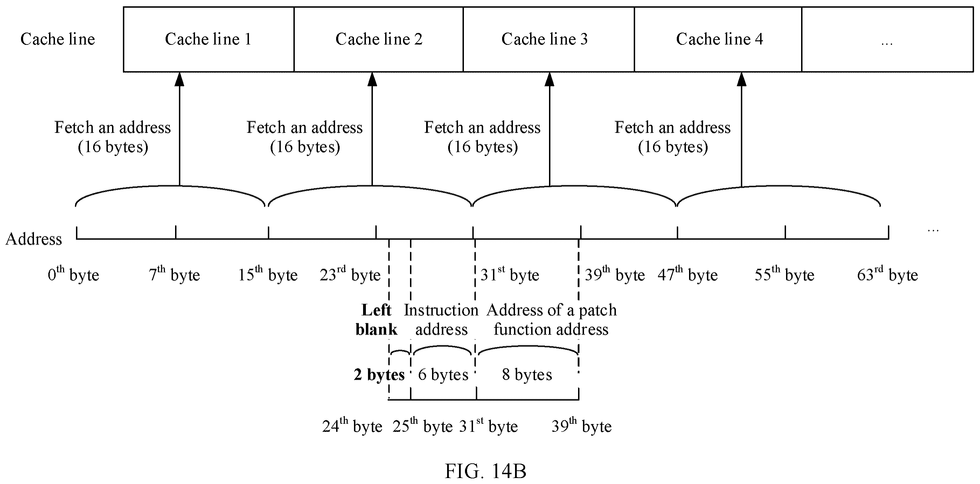

As shown in FIG. 14B, 2 null bytes may be added after a $23^{rd}$ byte. In this case, the $24^{th}$ byte and a $25^{th}$ byte are null bytes. The 6-byte storage address of the jump instruction in the function trampoline is stored between the $26^{th}$ byte and a $31^{st}$ byte. The 8-byte storage address of the patch function address in the function trampoline is stored between the $32^{nd}$ byte and a $39^{th}$ byte. After the null byte is newly added, as shown in FIG. 14B, when fetching an address for the second time, the CPU writes the 6-byte storage address of the jump instruction into the cache line 2; and when fetching an address for the third time, the CPU writes the 8-byte storage address of the patch function address into the cache line 3. In this way, it is ensured that the 8-byte storage address of the patch function address is written into one cache line at a time.

An instruction in the function trampoline may be modified. First, the data part in the function trampoline is filled with the patch function address (addr), and the jump instruction part is filled with a long jump instruction (0xff 25 00 00 00 00). When the patch function is unloaded, only last 8 bytes in the trampoline unit need to be rolled back.

In this way, a thread can jump to the patch area based on the function trampoline, and execute the patch function.

A modified instruction is as follows:

```
0x0:     0x00     00;
0x2:     0xff     25     00     00     00     00;
0x8:     addr
```

Herein, "0xff 25 00 00 00 00" may be understood as a jump instruction, and addr may be a patch function address. The jump instruction is used to read the patch function address and jump to the patch function based on the patch function address.

The modified instruction in the function trampoline may be referred to as a third jump instruction.

Optionally, the third jump instruction may be completely modified before the second jump instruction.

Optionally, some steps of modifying the second jump instruction may be completed before the step of modifying the third jump instruction, provided that when the second jump instruction is modified, the step of replacing the exception instruction in the first p bytes in the critical section with the operation code of the jump instruction is performed after the third jump instruction is completely modified.

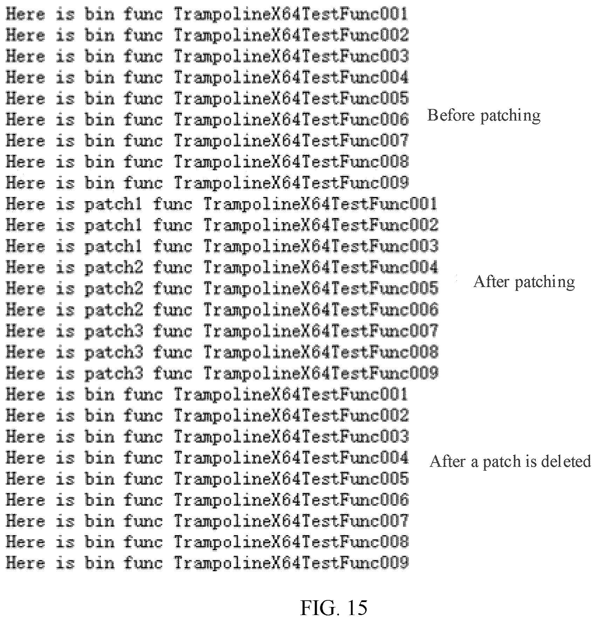

FIG. 15 is a diagram of code implementation of an original function, a patch function, and an original function obtained after the patch function is deleted.

In FIG. 15, a code segment before patching corresponds to an original function code segment, a code segment after patching corresponds to a patch function code segment, and a code segment after the patch function is deleted also corresponds to an original function code segment.

When the offset between the address of the original function and the address of the patch function is greater than the preset offset, after the second jump instruction and the third jump instruction are constructed, that is, after the second jump instruction is finally obtained, and the exception instruction in the first p bytes in the critical section is replaced with the operation code of the jump instruction, the suspended first thread may be woken up. Then, the first thread may jump to the function trampoline by using the second jump instruction, and then the first thread jumps to the patch area by using the third jump instruction in the function trampoline, and executes the patch function. In this way, the first thread does not need to execute the original function, and the first thread can implement, by executing the patch function, an expected function that cannot be implemented by executing the original function.

Optionally, after the first jump instruction or both the second jump instruction and the third jump instruction are constructed, a second thread may access the critical section, and the second thread is a thread that is not suspended.

In a possible implementation, the second thread may jump to the patch area by using the first jump instruction, and execute the patch function. In this way, the second thread does not need to execute the original function, and the second thread can implement, by executing the patch function, an expected function that cannot be implemented by executing the original function.

In another possible implementation, the second thread may jump to the function trampoline by using the second jump instruction in the original function, and then the second thread jumps to the patch area by using the third jump instruction in the function trampoline, and executes the patch function. In this way, the second thread does not need to execute the original function, and the second thread can implement, by executing the patch function, an expected function that cannot be implemented by executing the original function.

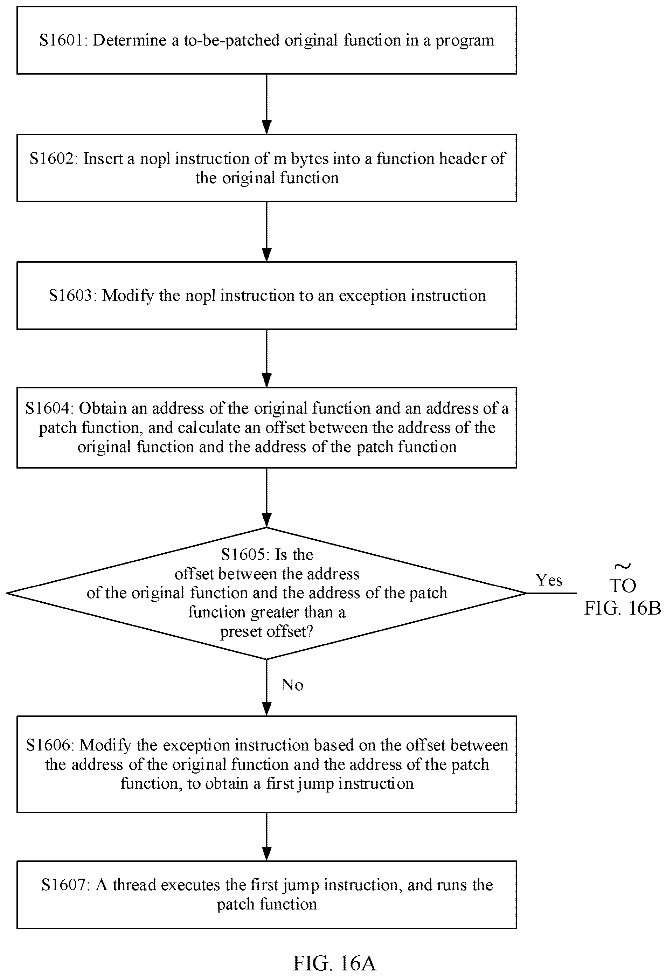

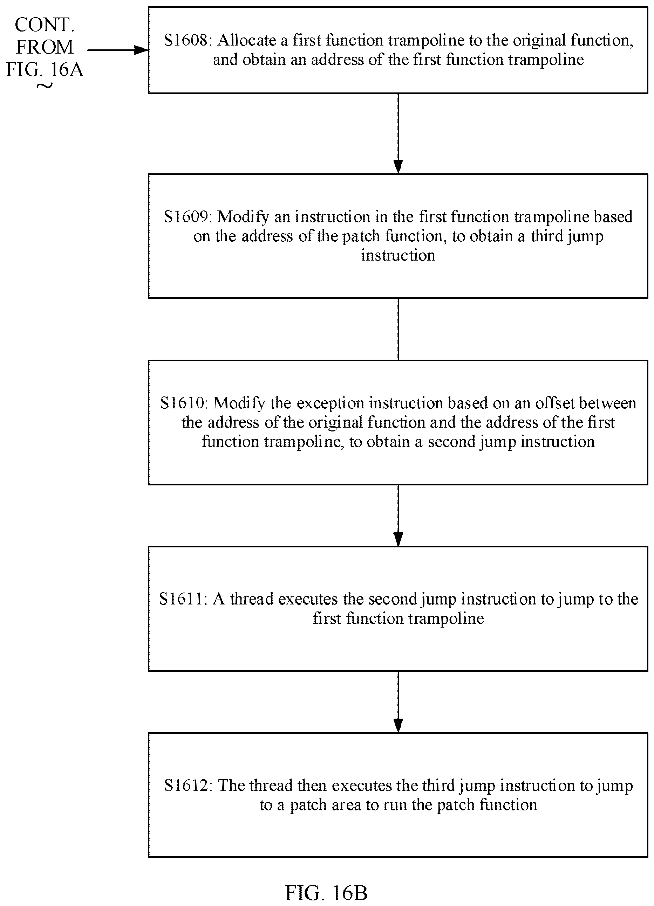

FIG. 16A and FIG. 16B are a schematic flowchart of a patch execution method according to this application.

S1601: Determine a to-be-patched original function in a program.

There may be a plurality of to-be-patched original functions in the program, and different original functions correspond to different patch files. In this application, only an example in which one original function is to be patched is used for description.

S1602: Insert a nopl instruction of m bytes into a function header of the original function.

Inserting a nopl instruction of m bytes into the function header of the original function is inserting a nopl instruction of m bytes before a first instruction in the original function.

The m bytes may be referred to as a critical section.

For details, refer to the descriptions in the embodiments in FIG. 4(a) and FIG. 4(b).

S1603: Modify the nopl instruction to an exception instruction.

To avoid a case in which another thread accesses the critical section in a patching process, the nopl instruction in the critical section needs to be modified to an exception instruction. When accessing the original function, another thread is directly suspended by the exception instruction and is in a to-be-executed state. After a jump function is ready, the suspended thread is woken up, so that the woken-up thread can access a patch function.

The nopl instruction is modified to the exception instruction. In this case, there is only one exception instruction in the critical section. In this way, all threads accessing the original function first access the exception instruction, and therefore all these threads are suspended. There is no thread accessing an instruction in the critical section, and therefore there is no need to trap into an operating system kernel to find whether there is a thread accessing the instruction in the critical section. In other words, the patch execution method provided in this application does not depend on the kernel. Even if application software in which the program is located has no permission to access a current operating system, that is, the current operating system is a third-party operating system, the program can still be patched.

Modifying the nopl instruction to the exception instruction may be modifying first p bytes in the m bytes in the critical section to the exception instruction, and the last q bytes in the m bytes in the critical section are null. For how to modify the nopl instruction to the exception instruction, refer to the embodiments shown in (a) in FIG. 5, (b) in FIG. 5, and (c) in FIG. 5.

S1604: Obtain an address of the original function and an address of the patch function, and calculate an offset between the address of the original function and the address of the patch function.

After the patch function is loaded to a patch area, the address of the patch function may be obtained.

The offset between the address of the original function and the address of the patch function may be calculated based on the address of the original function and the address of the patch function. The offset between the address of the original function and the address of the patch function may be obtained by subtracting the address of the original function from the address of the patch function.

S1605: Determine whether the offset between the address of the original function and the address of the patch function is greater than a preset offset.

When the offset between the address of the original function and the address of the patch function is less than or equal to the preset offset, S1606 and S1607 are performed.

When the offset between the address of the original function and the address of the patch function is greater than the preset offset, S1608 to S1612 are performed.

S1606: Modify the exception instruction based on the offset between the address of the original function and the address of the patch function, to obtain a first jump instruction.

In this way, based on the first jump instruction, a direct jump to the patch area can be made to execute the patch function.

Specifically, the first p bytes in the m bytes in the critical section may be modified to an operation code of the jump instruction, and the last q bytes in the m bytes in the critical section may be filled with an operand of the jump instruction, where the operand may be the offset between the address of the original function and the address of the patch function, to obtain the first jump instruction.

Optionally, when the first jump instruction is constructed, the operand of the jump instruction in the last q bytes in the critical section also needs to be first modified. Finally, the exception instruction in the first p bytes in the critical section is modified and replaced with the operation code of the jump instruction. If the operation code is modified before the operand, there is no exception instruction in the critical section. In this case, if another thread accesses the critical section, the another thread is not suspended. However, in this case, filling with an operand of the first jump instruction is not completed, and the another thread cannot jump. Consequently, a jump failure occurs. Based on this, the operand of the jump instruction in the last q bytes in the critical section may be first modified, and finally, the exception instruction in the first p bytes in the critical section is modified and replaced with the operation code of the jump instruction.

For specific implementation of obtaining the first jump instruction, refer to the descriptions in the embodiment in FIG. 7.

S1607: A thread executes the first jump instruction, and runs the patch function.

The thread may be a first thread. For example, the first thread may access the original function in S1603 to S1605. In this case, the first thread may be suspended by the exception instruction in the critical section. In S1606, after the exception instruction in the first p bytes in the critical section is modified and replaced with the operation code of the jump instruction, the suspended first thread may be woken up, so that the first thread can jump to the patch area by using the first jump instruction in the critical section, and execute the patch function. In this way, the first thread does not need to execute the original function, and the first thread can implement, by executing the patch function, an expected function that cannot be implemented by executing the original function.

The thread may alternatively be a second thread. For example, the second thread may access the original function after S1605. In this case, the second thread is not suspended. The second thread may directly jump to the patch area by using the first jump instruction in the critical section, and execute the patch function. In this way, the second thread does not need to execute the original function, and the second thread can implement, by executing the patch function, an expected function that cannot be implemented by executing the original function.

S1608: Allocate a first function trampoline to the original function, and obtain an address of the first function trampoline.

In some embodiments, there is an upper limit for a jump distance of the jump instruction. If the jump distance exceeds the upper limit, a jump failure occurs. To resolve a jump error caused due to an excessively long jump distance of the jump instruction, a function trampoline may be introduced. Based on the jump instruction, a jump to the function trampoline may be first made, and then a jump from the function trampoline to the patch area may be made. In this way, a distance of one jump made based on the jump instruction can be shortened.

Therefore, when the offset between the address of the original function and the address of the patch function is greater than the preset offset, a function trampoline, for example, the first function trampoline, needs to be allocated to the original function. In addition, the address of the first function trampoline is obtained.

For specific implementation of allocating the function trampoline to the original function, refer to the descriptions in the embodiments in FIG. 9 to FIG. 12.

S1609: Modify an instruction in the first function trampoline based on the address of the patch function, to obtain a third jump instruction.

Herein, the instruction in the first function trampoline is modified to obtain the third jump instruction, so that a thread can jump from the first function trampoline to the patch area to execute the patch function.

Modifying the instruction in the first function trampoline is filling the instruction in the first function trampoline with the address of the patch function, to obtain the third jump instruction. For details, refer to the descriptions in S604.

S1610: Modify the exception instruction based on an offset between the address of the original function and the address of the first function trampoline, to obtain a second jump instruction.

After the address of the first function trampoline is obtained, the offset between the address of the original function and the address of the first function trampoline may be calculated. In addition, the exception instruction is modified based on the offset between the address of the original function and the address of the first function trampoline, so that a jump from the original function to the first function trampoline can be made.

For how to modify the exception instruction to obtain the second jump instruction, refer to the descriptions in the embodiment in FIG. 8. Details are not described herein again in this application.

A reason why the second jump instruction is obtained after the third jump instruction is that if the second jump instruction is first constructed, there is no exception instruction in the critical section. In this case, if another thread accesses the critical section, the another thread is not suspended, and directly jumps to the first function trampoline based on the second jump instruction. However, in this case, the third trampoline may not be completely modified. In this case, when the another thread jumps to the third trampoline, a jump to the patch area cannot be made. Consequently, a jump failure occurs. Based on this, the third jump instruction may be first constructed, and then the second jump instruction is constructed.

Optionally, when the second jump instruction is constructed, the operand of the jump instruction in the last q bytes in the critical section also needs to be first modified. Finally, the exception instruction in the first p bytes in the critical section is modified and replaced with the operation code of the jump instruction. If the operation code is modified before the operand, there is no exception instruction in the critical section. In this case, if another thread accesses the critical section, the another thread is not suspended. However, in this case, filling with an operand of the second jump instruction is not completed, and the another thread cannot jump. Consequently, a jump failure occurs. Based on this, the operand of the jump instruction in the last q bytes in the critical section may be first modified, and finally, the exception instruction in the first p bytes in the critical section is modified and replaced with the operation code of the jump instruction.

Optionally, S1609 may alternatively be performed before S1610, provided that it is ensured that when the second jump instruction is modified, the step of replacing the exception instruction in the first p bytes in the critical section with the operation code of the jump instruction is performed after the third jump instruction is constructed.

S1611: A thread executes the second jump instruction to jump to the first function trampoline.

S1612: The thread then executes the third jump instruction to jump to the patch area to run the patch function.

The thread may be a first thread. For example, the first thread may access the original function in S1603 to S1605. In this case, the first thread may be suspended by the exception instruction in the critical section. In S1610, when the second jump instruction is modified, after the exception instruction in the first p bytes in the critical section is replaced with the operation code of the jump instruction, the suspended first thread may be woken up, so that the first thread can jump to the first function trampoline by using the second jump instruction in the critical section. Then, the first thread executes the second or third jump instruction, so that the first thread can jump to the patch area to run the patch function.

The thread may alternatively be a second thread. For example, the thread may access the original function after S1605. In this case, the second thread is not suspended. The second thread may directly jump to the first function trampoline by using the second jump instruction in the critical section. Then, the second thread executes the second or third jump instruction, so that the second thread can jump to the patch area to run the patch function.

In this way, the first thread or the second thread does not need to execute the original function, and the second thread can implement, by executing the patch function, an expected function that cannot be implemented by executing the original function.

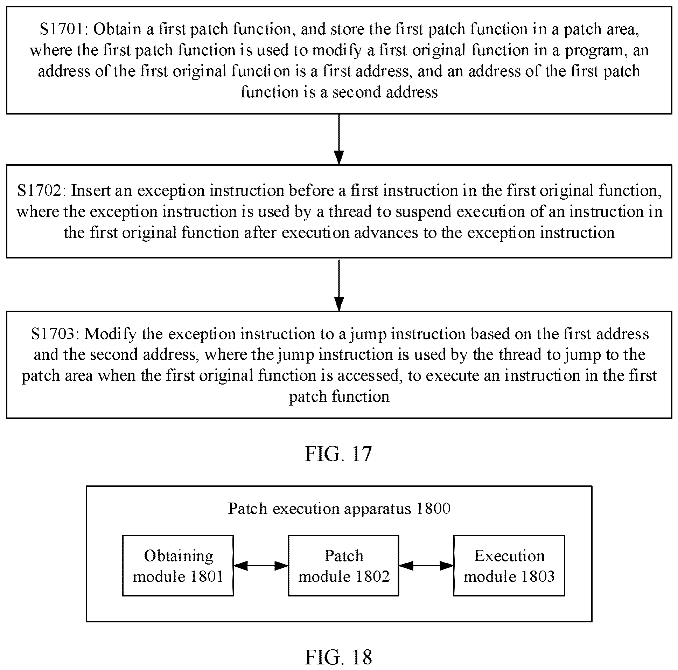

FIG. 17 is a schematic flowchart of another patch execution method according to this application.

S1701: Obtain a first patch function, and store the first patch function in a patch area, where the first patch function is used to modify a first original function in a program, an address of the first original function is a first address, and an address of the first patch function is a second address.

The first original function may be the original function described in the embodiment in FIG. 16A and FIG. 16B. The first address may be the address of the original function described in the embodiment in FIG. 16A and FIG. 16B.

The first patch function may be the patch function described in the embodiment in FIG. 16A and FIG. 16B. The second address may be the address of the patch function described in the embodiment in FIG. 16A and FIG. 16B.

S1702: Insert an exception instruction before a first instruction in the first original function, where the exception instruction is used by a thread to suspend execution of an instruction in the first original function after execution advances to the exception instruction.

The jump instruction is inserted, so that it can be ensured that after a patch is activated, a thread accessing the original function can jump to and access the patch function instead of the original function.

S1703: Modify the exception instruction to a jump instruction based on the first address and the second address, where the jump instruction is used by the thread to jump to the patch area when the first original function is accessed, to execute an instruction in the first patch function.

In a possible implementation, modifying the exception instruction to the jump instruction based on the first address and the second address specifically includes: when an offset between the first address and the second address is less than a preset offset, modifying the exception instruction to a first jump instruction based on the offset between the first address and the second address, where the first jump instruction is used by the thread to jump to the patch area when the first original function is accessed, to execute the instruction in the first patch function. A jump distance of the jump instruction is limited. When a one-step jump may be made, a jump from the original function to the patch function may be directly made.

In a possible implementation, a critical section in which the exception instruction is located includes an exception instruction operation code of p bytes and q null bytes; and modifying the exception instruction to the first jump instruction based on the offset between the first address and the second address specifically includes: filling the q null bytes with the offset between the first address and the second address; and after the q null bytes are filled with the offset between the first address and the second address, replacing the exception instruction operation code of the p bytes with a jump instruction operation code of the p bytes, to obtain the first jump instruction. In this way, finally, the exception instruction operation code is modified to the jump instruction operation code, so that it can be ensured that no jump error occurs. If the exception instruction operation code is first modified to the jump instruction operation code, and then the q null bytes are filled with the offset between the first address and the second address, before the q null bytes are filled with the offset between the first address and the second address, if another thread accesses the original function, a jump is directly made based on the jump instruction, and consequently an access error occurs.

In a possible implementation, modifying the exception instruction to the jump instruction based on the first address and the second address specifically includes: modifying an instruction in a first function trampoline based on the second address when an offset between the first address and the second address is greater than a preset offset, to obtain a third jump instruction, where an address of the first function trampoline is a third address; and modifying the exception instruction based on the first address and the third address, to obtain a second jump instruction, where the second jump instruction is used by the thread to jump to the first function trampoline when the first original function is accessed, to execute the third jump instruction in the first function trampoline, and the third jump instruction is used to jump to the patch area when being executed by the thread, to execute the instruction in the first patch function. In this way, a jump distance of the jump instruction is limited. When a one-step jump may not be made, a jump from the original function to the function trampoline may be first made, and then a jump from the function trampoline to the patch function may be made.

In a possible implementation, after the third jump instruction is obtained through modification, the second jump instruction is obtained through modification. In this way, the instruction in the first function trampoline is first modified to obtain the third jump instruction, and then the exception instruction is modified to the second jump instruction. If the exception instruction is first modified to the second jump instruction, and then the instruction in the first function trampoline is modified to obtain the third jump instruction, before the instruction in the first function trampoline is modified to obtain the third jump instruction, if another thread accesses the original function, a jump to the trampoline is directly made based on the second jump instruction. However, because the third jump instruction in the trampoline is not completely modified, an access error occurs.

In a possible implementation, the exception instruction includes an exception instruction operation code of p bytes, and q null bytes are further included after the exception instruction; modifying the instruction in the first function trampoline based on the second address, to obtain the third jump instruction specifically includes: filling a data part in the first function trampoline with the second address, to obtain the third jump instruction; and modifying the exception instruction based on the first address and the third address, to obtain the second jump instruction specifically includes: filling the q null bytes with an offset between the first address and the third address; and after the q null bytes are filled with the offset between the first address and the third address, replacing the exception instruction operation code of the p bytes with a jump instruction operation code of the p bytes, to obtain the second jump instruction. In this way, finally, the exception instruction operation code is modified to the jump instruction operation code, so that it can be ensured that no jump error occurs. If the exception instruction operation code is first modified to the jump instruction operation code, and then the q null bytes are filled with the offset between the first address and the third address, before the q null bytes are filled with the offset between the first address and the third address, if another thread accesses the original function, a jump is directly made based on the jump instruction, and consequently an access error occurs.

In a possible implementation, modifying the instruction in the first function trampoline based on the second address when the offset between the first address and the second address is greater than the preset offset, to obtain the third jump instruction specifically includes: when the offset between the first address and the second address is greater than the preset offset, determining the first function trampoline in an idle state from a plurality of function trampolines; and when the first function trampoline has not been used, modifying the instruction in the first function trampoline based on the second address, to obtain the third jump instruction; or when the first function trampoline has been previously used, waiting until duration for which the first function trampoline is not occupied exceeds first duration, and then modifying the instruction in the first function trampoline based on the second address, to obtain the third jump instruction. In this way, a function trampoline may be allocated to the original function. There are different allocation manners for different types of trampolines.

For example, the first function trampoline may be the function trampoline 3 shown in FIG. 10. The first function trampoline may alternatively be the function trampoline 5 shown in FIG. 11. The first function trampoline may be the function trampoline 5 shown in FIG. 12.

In a possible implementation, the method further includes: obtaining a second patch function, and storing the second patch function in the patch area, where the second patch function is used to modify the first original function in the program, and an address of the second patch function is a fourth address; and modifying the data part in the first function trampoline to the fourth address, to obtain a fourth jump instruction, where the fourth jump instruction is used to jump to the patch area when being executed by the thread, to execute an instruction in the second patch function. In this way, when a same function is repeatedly patched, there is no need to reconstruct a jump instruction or repeatedly construct an instruction in a function trampoline, and only a data part in the function trampoline needs to be modified, thereby reducing operation steps.

In a possible implementation, when a storage address of the address of the first patch function is not capable of being read into a cache line, a null byte is added before the storage address of the address of the first patch function, to change the storage address of the address of the first patch function, where a storage address that is of the address of the first patch function and that is obtained after the change is in a same cache line when being read into a cache. In this way, it can be ensured that a patch function address can be written into a same cache line at a time, to avoid an access error.

In a possible implementation, the method further includes: when a first thread accesses the exception instruction inserted into the first original function, suspending execution of the instruction in the first original function by the first thread; and after the exception instruction is modified to the jump instruction based on the offset between the first address and the second address, waking up the first thread to jump to the patch area by using the jump instruction, to execute the instruction in the first patch function. In this way, before the jump instruction is completely modified, the thread accessing the original function is suspended. After the jump instruction is completely modified, the suspended thread is woken up to jump to the patch area by using the jump instruction, to execute the patch function.

In a possible implementation, the method further includes: after the exception instruction is modified to the jump instruction based on the offset between the first address and the second address, when a second thread accesses the jump instruction inserted into the first original function, controlling the second thread to jump to the patch area by using the jump instruction, to execute the instruction in the first patch function. After the jump instruction is completely modified, the thread accessing the original function directly jumps to the patch area by using the jump instruction, to execute the patch function.

According to this application, in a first aspect, a defect in a to-be-patched original function in a program can be fixed by using a patch function. In a second aspect, the program can be patched without restarting the program, thereby improving program execution efficiency and patching efficiency. In a third aspect, in this application, an exception instruction is inserted into a function header of the original function. In this case, the exception instruction is a critical section. In this way, all threads accessing the original function first access the exception instruction, and therefore all these threads are suspended. There is no thread accessing an instruction in the critical section, and therefore there is no need to trap into an operating system kernel to find whether there is a thread accessing the instruction in the critical section. In other words, the patch execution method provided in this application does not depend on the kernel. Even if application software in which the program is located has no permission to access a current operating system, that is, the current operating system is a third-party operating system, the program can still be patched.

FIG. 18 is a diagram of a patch execution apparatus according to this application.

As shown in FIG. 18, the patch execution apparatus 1800 includes an obtaining module 1801, a patch module 1802, and an execution module 1803.

The obtaining module 1801 is configured to: obtain a first patch function, and store the first patch function in a patch area, where the first patch function is used to modify a first original function in a program, an address of the first original function is a first address, and an address of the first patch function is a second address.

The patch module 1802 is configured to insert an exception instruction before a first instruction in the first original function, where the exception instruction is used by a thread to suspend execution of an instruction in the first original function after execution advances to the exception instruction.

The execution module 1803 is configured to modify the exception instruction to a jump instruction based on the first address and the second address, where the jump instruction is used by the thread to jump to the patch area when the first original function is accessed, to execute an instruction in the first patch function.

The exception instruction is inserted, so that it can be ensured that after a patch is activated, a thread accessing the original function can jump to and access the patch function instead of the original function.

According to this application, in a first aspect, a defect in a to-be-patched original function in a program can be fixed by using a patch function. In a second aspect, the program can be patched without restarting the program, thereby improving program execution efficiency and patching efficiency. In a third aspect, in this application, an exception instruction is inserted into a function header of the original function. In this case, the exception instruction is a critical section. In this way, all threads accessing the original function first access the exception instruction, and therefore all these threads are suspended. There is no thread accessing an instruction in the critical section, and therefore there is no need to trap into an operating system kernel to find whether there is a thread accessing the instruction in the critical section. In other words, the patch execution method provided in this application does not depend on the kernel. Even if application software in which the program is located has no permission to access a current operating system, that is, the current operating system is a third-party operating system, the program can still be patched.

In a possible implementation, the execution module 1803 is specifically configured to: when an offset between the first address and the second address is less than a preset offset, modify the exception instruction to a first jump instruction based on the offset between the first address and the second address, where the first jump instruction is used by the thread to jump to the patch area when the first original function is accessed, to execute the instruction in the first patch function.

A jump distance of the jump instruction is limited. When a one-step jump may be made, a jump from the original function to the patch function may be directly made.

In a possible implementation, the exception instruction includes an exception instruction operation code of p bytes, and q null bytes are further included after the exception instruction; and the execution module 1803 is specifically configured to: fill the q null bytes with the offset between the first address and the second address; and after the q null bytes are filled with the offset between the first address and the second address, replace the exception instruction operation code of the p bytes with a jump instruction operation code of the p bytes, to obtain the first jump instruction.

In this way, finally, the exception instruction operation code is modified to the jump instruction operation code, so that it can be ensured that no jump error occurs. If the exception instruction operation code is first modified to the jump instruction operation code, and then the q null bytes are filled with the offset between the first address and the second address, before the q null bytes are filled with the offset between the first address and the second address, if another thread accesses the original function, a jump is directly made based on the jump instruction, and consequently an access error occurs.

In a possible implementation, the execution module 1803 is specifically configured to: modify an instruction in a first function trampoline based on the second address when an offset between the first address and the second address is greater than a preset offset, to obtain a third jump instruction, where an address of the first function trampoline is a third address; and modify the exception instruction based on the first address and the third address, to obtain a second jump instruction, where the second jump instruction is used by the thread to jump to the first function trampoline when the first original function is accessed, to execute the third jump instruction in the first function trampoline, and the third jump instruction is used to jump to the patch area when being executed by the thread, to execute the instruction in the first patch function.

In this way, a jump distance of the jump instruction is limited. When a one-step jump may not be made, a jump from the original function to the function trampoline may be first made, and then a jump from the function trampoline to the patch function may be made.

In a possible implementation, after the third jump instruction is obtained through modification, the second jump instruction is obtained through modification. In this way, the instruction in the first function trampoline is first modified to obtain the third jump instruction, and then the exception instruction is modified to the second jump instruction.

If the exception instruction is first modified to the second jump instruction, and then the instruction in the first function trampoline is modified to obtain the third jump instruction, before the instruction in the first function trampoline is modified to obtain the third jump instruction, if another thread accesses the original function, a jump to the trampoline is directly made based on the second jump instruction. However, because the third jump instruction in the trampoline is not completely modified, an access error occurs.

In a possible implementation, the exception instruction includes an exception instruction operation code of p bytes, and q null bytes are further included after the exception instruction; the execution module 1803 is specifically configured to fill a data part in the first function trampoline with the second address, to obtain the third jump instruction; and the execution module 1803 is specifically configured to: fill the q null bytes with an offset between the first address and the third address; and after the q null bytes are filled with the offset between the first address and the third address, replace the exception instruction operation code of the p bytes with a jump instruction operation code of the p bytes, to obtain the second jump instruction.

In this way, finally, the exception instruction operation code is modified to the jump instruction operation code, so that it can be ensured that no jump error occurs. If the exception instruction operation code is first modified to the jump instruction operation code, and then the q null bytes are filled with the offset between the first address and the third address, before the q null bytes are filled with the offset between the first address and the third address, if another thread accesses the original function, a jump is directly made based on the jump instruction, and consequently an access error occurs.

In a possible implementation, the execution module 1803 is specifically configured to: when the offset between the first address and the second address is greater than the preset offset, determine the first function trampoline in an idle state from a plurality of function trampolines; and when the first function trampoline has not been used, modify the instruction in the first function trampoline based on the second address, to obtain the third jump instruction; or when the first function trampoline has been previously used, wait until duration for which the first function trampoline is not occupied exceeds first duration, and then modify the instruction in the first function trampoline based on the second address, to obtain the third jump instruction.

In this way, a function trampoline may be allocated to the original function. There are different allocation manners for different types of trampolines.

In a possible implementation, the obtaining module 1801 is further configured to: obtain a second patch function, and store the second patch function in the patch area, where the second patch function is used to modify the first original function in the program, and an address of the second patch function is a fourth address; and the execution module 1803 is further configured to modify the data part in the first function trampoline to the fourth address, to obtain a fourth jump instruction, where the fourth jump instruction is used to jump to the patch area when being executed by the thread, to execute an instruction in the second patch function.

In this way, when a same function is repeatedly patched, there is no need to reconstruct a jump instruction or repeatedly construct an instruction in a function trampoline, and only a data part in the function trampoline needs to be modified, thereby reducing operation steps.

In a possible implementation, the execution module 1803 is further configured to: when a storage address of the address of the first patch function is not capable of being read into a cache line, add a null byte before the storage address of the address of the first patch function, to change the storage address of the address of the first patch function, where a storage address that is of the address of the first patch function and that is obtained after the change is in a same cache line when being read into a cache.

In this way, it can be ensured that a patch function address can be written into a same cache line at a time, to avoid an access error.

In a possible implementation, the patch module 1802 is further configured to: when a first thread accesses the exception instruction inserted into the first original function, suspend execution of the instruction in the first original function by the first thread; and the execution module 1803 is further configured to: after the exception instruction is modified to the jump instruction based on the offset between the first address and the second address, wake up the first thread to jump to the patch area by using the jump instruction, to execute the instruction in the first patch function.

In this way, before the jump instruction is completely modified, the thread accessing the original function is suspended. After the jump instruction is completely modified, the suspended thread is woken up to jump to the patch area by using the jump instruction, to execute the patch function.

In a possible implementation, the execution module 1803 is further configured to: after the exception instruction is modified to the jump instruction based on the offset between the first address and the second address, when a second thread accesses the jump instruction inserted into the first original function, control the second thread to jump to the patch area by using the jump instruction, to execute the instruction in the first patch function.

After the jump instruction is completely modified, the thread accessing the original function directly jumps to the patch area by using the jump instruction, to execute the patch function.

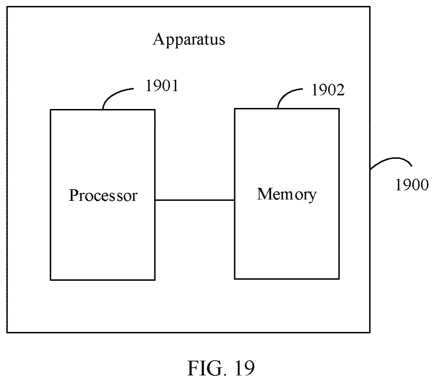

FIG. 19 is a diagram of an apparatus 1900 according to an embodiment of this application.

As shown in FIG. 19, the apparatus 1900 includes a processor 1901 and a memory 1902. The processor 1901 is coupled to the memory 1902. The memory 1902 is configured to store computer program code, and the computer program code includes computer instructions. The processor 1901 invokes the computer instructions to perform the following operations: obtaining a first patch function, and storing the first patch function in a patch area, where the first patch function is used to modify a first original function in a program, an address of the first original function is a first address, and an address of the first patch function is a second address; inserting an exception instruction before a first instruction in the first original function, where the exception instruction is used by a thread to suspend execution of an instruction in the first original function after execution advances to the exception instruction; and modifying the exception instruction to a jump instruction based on the first address and the second address, where the jump instruction is used by the thread to jump to the patch area when the first original function is accessed, to execute an instruction in the first patch function.

The exception instruction is inserted, so that it can be ensured that after a patch is activated, a thread accessing the original function can jump to and access the patch function instead of the original function.

According to this application, in a first aspect, a defect in a to-be-patched original function in a program can be fixed by using a patch function. In a second aspect, the program can be patched without restarting the program, thereby improving program execution efficiency and patching efficiency. In a third aspect, in this application, an exception instruction is inserted into a function header of the original function. In this case, the exception instruction is a critical section. In this way, all threads accessing the original function first access the exception instruction, and therefore all these threads are suspended. There is no thread accessing an instruction in the critical section, and therefore there is no need to trap into an operating system kernel to find whether there is a thread accessing the instruction in the critical section. In other words, the patch execution method provided in this application does not depend on the kernel. Even if application software in which the program is located has no permission to access a current operating system, that is, the current operating system is a third-party operating system, the program can still be patched.

In a possible implementation, the processor 1901 invokes the computer instructions to perform the following operation: Modifying the exception instruction to the jump instruction based on the first address and the second address specifically includes: when an offset between the first address and the second address is less than a preset offset, modifying the exception instruction to a first jump instruction based on the offset between the first address and the second address, where the first jump instruction is used by the thread to jump to the patch area when the first original function is accessed, to execute the instruction in the first patch function. A jump distance of the jump instruction is limited. When a one-step jump may be made, a jump from the original function to the patch function may be directly made.

In a possible implementation, the processor 1901 invokes the computer instructions to perform the following operations: The exception instruction includes an exception instruction operation code of p bytes, and q null bytes are further included after the exception instruction; and modifying the exception instruction to the first jump instruction based on the offset between the first address and the second address specifically includes: filling the q null bytes with the offset between the first address and the second address; and after the q null bytes are filled with the offset between the first address and the second address, replacing the exception instruction operation code of the p bytes with a jump instruction operation code of the p bytes, to obtain the first jump instruction. In this way, finally, the exception instruction operation code is modified to the jump instruction operation code, so that it can be ensured that no jump error occurs. If the exception instruction operation code is first modified to the jump instruction operation code, and then the q null bytes are filled with the offset between the first address and the second address, before the q null bytes are filled with the offset between the first address and the second address, if another thread accesses the original function, a jump is directly made based on the jump instruction, and consequently an access error occurs.

In a possible implementation, the processor 1901 invokes the computer instructions to perform the following operations: Modifying the exception instruction to the jump instruction based on the first address and the second address specifically includes: modifying an instruction in a first function trampoline based on the second address when an offset between the first address and the second address is greater than a preset offset, to obtain a third jump instruction, where an address of the first function trampoline is a third address; and modifying the exception instruction based on the first address and the third address, to obtain a second jump instruction, where the second jump instruction is used by the thread to jump to the first function trampoline when the first original function is accessed, to execute the third jump instruction in the first function trampoline, and the third jump instruction is used to jump to the patch area when being executed by the thread, to execute the instruction in the first patch function. In this way, a jump distance of the jump instruction is limited. When a one-step jump may not be made, a jump from the original function to the function trampoline may be first made, and then a jump from the function trampoline to the patch function may be made.

In a possible implementation, the processor 1901 invokes the computer instructions to perform the following operation: After the third jump instruction is obtained through modification, the second jump instruction is obtained through modification. In this way, the instruction in the first function trampoline is first modified to obtain the third jump instruction, and then the exception instruction is modified to the second jump instruction. If the exception instruction is first modified to the second jump instruction, and then the instruction in the first function trampoline is modified to obtain the third jump instruction, before the instruction in the first function trampoline is modified to obtain the third jump instruction, if another thread accesses the original function, a jump to the trampoline is directly made based on the second jump instruction. However, because the third jump instruction in the trampoline is not completely modified, an access error occurs.

In a possible implementation, the processor 1901 invokes the computer instructions to perform the following operations: The exception instruction includes an exception instruction operation code of p bytes, and q null bytes are further included after the exception instruction; modifying the instruction in the first function trampoline based on the second address, to obtain the third jump instruction specifically includes: filling a data part in the first function trampoline with the second address, to obtain the third jump instruction; and modifying the exception instruction based on the first address and the third address, to obtain the second jump instruction specifically includes: filling the q null bytes with an offset between the first address and the third address; and after the q null bytes are filled with the offset between the first address and the third address, replacing the exception instruction operation code of the p bytes with a jump instruction operation code of the p bytes, to obtain the second jump instruction. In this way, finally, the exception instruction operation code is modified to the jump instruction operation code, so that it can be ensured that no jump error occurs. If the exception instruction operation code is first modified to the jump instruction operation code, and then the q null bytes are filled with the offset between the first address and the third address, before the q null bytes are filled with the offset between the first address and the third address, if another thread accesses the original function, a jump is directly made based on the jump instruction, and consequently an access error occurs.

In a possible implementation, the processor 1901 invokes the computer instructions to perform the following operations: Modifying the instruction in the first function trampoline based on the second address when the offset between the first address and the second address is greater than the preset offset, to obtain the third jump instruction specifically includes: when the offset between the first address and the second address is greater than the preset offset, determining the first function trampoline in an idle state from a plurality of function trampolines; and when the first function trampoline has not been used, modifying the instruction in the first function trampoline based on the second address, to obtain the third jump instruction; or when the first function trampoline has been previously used, waiting until duration for which the first function trampoline is not occupied exceeds first duration, and then modifying the instruction in the first function trampoline based on the second address, to obtain the third jump instruction. In this way, a function trampoline may be allocated to the original function. There are different allocation manners for different types of trampolines.

In a possible implementation, the processor 1901 invokes the computer instructions to perform the following operations: obtaining a second patch function, and storing the second patch function in the patch area, where the second patch function is used to modify the first original function in the program, and an address of the second patch function is a fourth address; and modifying the data part in the first function trampoline to the fourth address, to obtain a fourth jump instruction, where the fourth jump instruction is used to jump to the patch area when being executed by the thread, to execute an instruction in the second patch function. In this way, when a same function is repeatedly patched, there is no need to reconstruct a jump instruction or repeatedly construct an instruction in a function trampoline, and only a data part in the function trampoline needs to be modified, thereby reducing operation steps.

In a possible implementation, the processor 1901 invokes the computer instructions to perform the following operation: when a storage address of the address of the first patch function is not capable of being read into a cache line, adding a null byte before the storage address of the address of the first patch function, to change the storage address of the address of the first patch function, where a storage address that is of the address of the first patch function and that is obtained after the change is in a same cache line when being read into a cache. In this way, it can be ensured that a patch function address can be written into a same cache line at a time, to avoid an access error.

In a possible implementation, the processor 1901 invokes the computer instructions to perform the following operations: when a first thread accesses the exception instruction inserted into the first original function, suspending execution of the instruction in the first original function by the first thread; and after the exception instruction is modified to the jump instruction based on the offset between the first address and the second address, waking up the first thread to jump to the patch area by using the jump instruction, to execute the instruction in the first patch function. In this way, before the jump instruction is completely modified, the thread accessing the original function is suspended. After the jump instruction is completely modified, the suspended thread is woken up to jump to the patch area by using the jump instruction, to execute the patch function.

In a possible implementation, the processor 1901 invokes the computer instructions to perform the following operation: after the exception instruction is modified to the jump instruction based on the offset between the first address and the second address, when a second thread accesses the jump instruction inserted into the first original function, controlling the second thread to jump to the patch area by using the jump instruction, to execute the instruction in the first patch function. After the jump instruction is completely modified, the thread accessing the original function directly jumps to the patch area by using the jump instruction, to execute the patch function.

The implementations of this application may be randomly combined to achieve different technical effects.

All or some of the foregoing embodiments may be implemented by using software, hardware, firmware, or any combination thereof. When software is used for implementation, all or some of the foregoing embodiments may be implemented in a form of a computer program product. The computer program product includes one or more computer instructions. When the computer program instructions are loaded and executed on a computer, all or some of the procedures or functions in this application are generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

A person of ordinary skill in the art may understand that all or some of the procedures of the methods in the foregoing embodiments may be implemented by a computer program by instructing related hardware. The program may be stored in a computer-readable storage medium. When the program is executed, the procedures in the foregoing method embodiments may be performed. The storage medium includes any medium that can store program code, for example, a ROM, a random access memory RAM, a magnetic disk, or an optical disc.

In conclusion, the foregoing descriptions are merely embodiments of the technical solutions of the present invention, but are not intended to limit the protection scope of the present invention. Any modification, equivalent replacement, improvement, or the like made based on the disclosure of the present invention shall fall within the protection scope of the present invention.

## Claims

1. A patch execution method, wherein the method comprises:

   obtaining a first patch function, and storing the first patch function in a patch area, wherein the first patch function is used to modify a first original function in a program, an address of the first original function is a first address, and an address of the first patch function is a second address;

inserting an exception instruction before a first instruction in the first original function, wherein the exception instruction is used by a thread to suspend execution of an instruction in the first original function after execution advances to the exception instruction; and

modifying the exception instruction to a jump instruction based on the first address and the second address, wherein the jump instruction is used by the thread to jump to the patch area when the first original function is accessed, to execute an instruction in the first patch function.

2. The method according to claim 1, wherein modifying the exception instruction to the jump instruction based on the first address and the second address specifically comprises:

when an offset between the first address and the second address is less than a preset offset, modifying the exception instruction to a first jump instruction based on the offset between the first address and the second address, wherein the first jump instruction is used by the thread to jump to the patch area when the first original function is accessed, to execute the instruction in the first patch function.

3. The method according to claim 2, wherein the exception instruction comprises an exception instruction operation code of p bytes, and q null bytes are further comprised after the exception instruction; and

modifying the exception instruction to the first jump instruction based on the offset between the first address and the second address specifically comprises:

filling the q null bytes with the offset between the first address and the second address; and

after the q null bytes are filled with the offset between the first address and the second address, replacing the exception instruction operation code of the p bytes with a jump instruction operation code of the p bytes, to obtain the first jump instruction.

4. The method according to claim 1, wherein modifying the exception instruction to the jump instruction based on the first address and the second address specifically comprises:

modifying an instruction in a first function trampoline based on the second address when an offset between the first address and the second address is greater than a preset offset, to obtain a third jump instruction, wherein an address of the first function trampoline is a third address; and

modifying the exception instruction based on the first address and the third address, to obtain a second jump instruction, wherein

the second jump instruction is used by the thread to jump to the first function trampoline when the first original function is accessed, to execute the third jump instruction in the first function trampoline, and the third jump instruction is used to jump to the patch area when being executed by the thread, to execute the instruction in the first patch function.

5. The method according to claim 4, wherein after the third jump instruction is obtained through modification, the second jump instruction is obtained through modification.

6. The method according to claim 4 or 5, wherein the exception instruction comprises an exception instruction operation code of p bytes, and q null bytes are further comprised after the exception instruction;

modifying the instruction in the first function trampoline based on the second address, to obtain the third jump instruction specifically comprises:

filling a data part in the first function trampoline with the second address, to obtain the third jump instruction; and

modifying the exception instruction based on the first address and the third address, to obtain the second jump instruction specifically comprises:

filling the q null bytes with an offset between the first address and the third address; and

after the q null bytes are filled with the offset between the first address and the third address, replacing the exception instruction operation code of the p bytes with a jump instruction operation code of the p bytes, to obtain the second jump instruction.

7. The method according to any one of claims 4 to 6, wherein modifying the instruction in the first function trampoline based on the second address when the offset between the first address and the second address is greater than the preset offset, to obtain the third jump instruction specifically comprises:

> when the offset between the first address and the second address is greater than the preset offset, determining the first function trampoline in an idle state from a plurality of function trampolines; and
> when the first function trampoline has not been used, modifying the instruction in the first function trampoline based on the second address, to obtain the third jump instruction; or
> when the first function trampoline has been previously used, waiting until duration for which the first function trampoline is not occupied exceeds first duration, and then modifying the instruction in the first function trampoline based on the second address, to obtain the third jump instruction.

8. The method according to any one of claims 4 to 7, wherein the method further comprises:

> obtaining a second patch function, and storing the second patch function in the patch area, wherein the second patch function is used to modify the first original function in the program, and an address of the second patch function is a fourth address; and
> modifying the data part in the first function trampoline to the fourth address, to obtain a fourth jump instruction, wherein the fourth jump instruction is used to jump to the patch area when being executed by the thread, to execute an instruction in the second patch function.

9. The method according to any one of claims 1 to 8, wherein when a storage address of the address of the first patch function is not capable of being read into a cache line, a null byte is added before the storage address of the address of the first patch function, to change the storage address of the address of the first patch function, wherein a storage address that is of the address of the first patch function and that is obtained after the change is in a same cache line when being read into a cache.

10. The method according to any one of claims 1 to 9, wherein the method further comprises:

> when a first thread accesses the exception instruction inserted into the first original function, suspending execution of the instruction in the first original function by the first thread; and
> after the exception instruction is modified to the jump instruction based on the offset between the first address and the second address, waking up the first thread to jump to the patch area by using the jump instruction, to execute the instruction in the first patch function.

11. The method according to any one of claims 1 to 9, wherein the method further comprises:
after the exception instruction is modified to the jump instruction based on the offset between the first address and the second address, when a second thread accesses the jump instruction inserted into the first original function, controlling the second thread to jump to the patch area by using the jump instruction, to execute the instruction in the first patch function.

12. A patch execution apparatus, wherein the patch execution apparatus comprises an obtaining module, a patch module, and an execution module;

> the obtaining module is configured to: obtain a first patch function, and store the first patch function in a patch area, wherein the first patch function is used to modify a first original function in a program, an address of the first original function is a first address, and an address of the first patch function is a second address;
> the patch module is configured to insert an exception instruction before a first instruction in the first original function, wherein the exception instruction is used by a thread to suspend execution of an instruction in the first original function after execution advances to the exception instruction; and
> the execution module is configured to modify the exception instruction to a jump instruction based on the first address and the second address, wherein the jump instruction is used by the thread to jump to the patch area when the first original function is accessed, to execute an instruction in the first patch function.

13. The apparatus according to claim 12, wherein the execution module is specifically configured to: when an offset between the first address and the second address is less than a preset offset, modify the exception instruction to a first jump instruction based on the offset between the first address and the second address, wherein the first jump instruction is used by the thread to jump to the patch area when the first original function is accessed, to execute the instruction in the first patch function.

14. The apparatus according to claim 13, wherein the exception instruction comprises an exception instruction operation code of p bytes, and q null bytes are further comprised after the exception instruction; and the execution module is specifically configured to:

fill the q null bytes with the offset between the first address and the second address; and
after the q null bytes are filled with the offset between the first address and the second address, replace the exception instruction operation code of the p bytes with a jump instruction operation code of the p bytes, to obtain the first jump instruction.

15. The apparatus according to claim 12, wherein the execution module is specifically configured to:

modify an instruction in a first function trampoline based on the second address when an offset between the first address and the second address is greater than a preset offset, to obtain a third jump instruction, wherein an address of the first function trampoline is a third address; and
modify the exception instruction based on the first address and the third address, to obtain a second jump instruction, wherein
the second jump instruction is used by the thread to jump to the first function trampoline when the first original function is accessed, to execute the third jump instruction in the first function trampoline, and the third jump instruction is used to jump to the patch area when being executed by the thread, to execute the instruction in the first patch function.

16. The apparatus according to claim 15, wherein after the third jump instruction is obtained through modification, the second jump instruction is obtained through modification.

17. The apparatus according to claim 15 or 16, wherein the exception instruction comprises an exception instruction operation code of p bytes, and q null bytes are further comprised after the exception instruction;

the execution module is specifically configured to fill a data part in the first function trampoline with the second address, to obtain the third jump instruction; and
the execution module is specifically configured to:

fill the q null bytes with an offset between the first address and the third address; and
after the q null bytes are filled with the offset between the first address and the third address, replace the exception instruction operation code of the p bytes with a jump instruction operation code of the p bytes, to obtain the second jump instruction.

18. The apparatus according to any one of claims 15 to 17, wherein the execution module is specifically configured to:

when the offset between the first address and the second address is greater than the preset offset, determine the first function trampoline in an idle state from a plurality of function trampolines; and
when the first function trampoline has not been used, modify the instruction in the first function trampoline based on the second address, to obtain the third jump instruction; or
when the first function trampoline has been previously used, wait until duration for which the first function trampoline is not occupied exceeds first duration, and then modify the instruction in the first function trampoline based on the second address, to obtain the third jump instruction.

19. The apparatus according to any one of claims 15 to 18, wherein the obtaining module is further configured to: obtain a second patch function, and store the second patch function in the patch area, wherein the second patch function is used to modify the first original function in the program, and an address of the second patch function is a fourth address; and
the execution module is further configured to modify the data part in the first function trampoline to the fourth address, to obtain a fourth jump instruction, wherein the fourth jump instruction is used to jump to the patch area when being executed by the thread, to execute an instruction in the second patch function.

20. The apparatus according to any one of claims 12 to 19, wherein the execution module is further configured to: when a storage address of the address of the first patch function is not capable of being read into a cache line, add a null byte before the storage address of the address of the first patch function, to change the storage address of the address of the first patch function, wherein

a storage address that is of the address of the first patch function and that is obtained after the change is in a same cache line when being read into a cache.

21. The apparatus according to any one of claims 12 to 20, wherein the patch module is further configured to: when a first thread accesses the exception instruction inserted into the first original function, suspend execution of the instruction in the first original function by the first thread; and
the execution module is further configured to: after the exception instruction is modified to the jump instruction based on the offset between the first address and the second address, wake up the first thread to jump to the patch area by using the jump instruction, to execute the instruction in the first patch function.

22. The apparatus according to any one of claims 12 to 20, wherein the execution module is further configured to: after the exception instruction is modified to the jump instruction based on the offset between the first address and the second address, when a second thread accesses the jump instruction inserted into the first original function, control the second thread to jump to the patch area by using the jump instruction, to execute the instruction in the first patch function.

23. A computer-readable storage medium, configured to store computer instructions, wherein when the computer instructions are run on a patch execution apparatus, the patch execution apparatus is enabled to perform the method according to any one of claims 1 to 11.

24. A computer program product, wherein when the computer program product is run on a patch execution apparatus, the patch execution apparatus is enabled to perform the method according to any one of claims 1 to 11.

Critical section

Original function

Modify first three instructions in the original function to a jump instruction

Original function into which a nop1 instruction is inserted

nop1 instruction

Critical section

| 0000000000000010 <funcb>: | | |
|---|---|---|
| bf 00 00 00 00 | mov | $0x0, %edi |
| 48 83 ec 08 | sub | $0x8, %rsp |
| 31 c0 | xor | %eax, %eax |
| e8 00 00 00 00 | callq | 25 <funcb+0x15> |
| 31 c0 | xor | %eax, %eax |
| 48 83 c4 08 | add | $0x8, %rsp |
| C3 | retq | |

| 0000000000000010 <funcb>: | | |
|---|---|---|
| 0f 1f 44 00 00 | nop1 | 0x0 (%rax, %rax, 1) |
| e8 00 00 00 00 | callq | 25 <funcb+0x15> |
| 31 c0 | xor | %eax, %eax |
| 48 83 c4 08 | add | $0x8, %rsp |
| C3 | retq | |

FIG. 1

Terminal

4: Patch operation command

Target end

Main control board

5: Patch file
download
instruction

Patch
management
module

Software
loading module

6:
Download
the patch
file

Software
repository

3: Store the
patch file

2: Patch file

Host end

Patch tool

1: Create a patch
file

9: Patch file
running instruction

7: Patch file

Service board

Patch running module

11: Perform an
operation on the
patch file

10:
Invoke an
interface

Patch
management lib

8: Store the
patch file

FIG. 2

EP 4 675 423 A1

Software
layer

Application software (including a patch management lib)

Third-party operating system

Third-party virtual operating system

Hardware
layer

CPU

ROM

RAM

MIPS

FIG. 3

Original function

```
0000000000000010 <funcb>:
bf 00 00 00 00          mov      $0x0, %edi
48 83 ec 08             sub      $0x8, %rsp
31 c0                   xor      %eax, %eax
e8 00 00 00 00          callq    25 <funcb+0x15>
31 c0                   xor      %eax, %eax
48 83 c4 08             add      $0x8, %rsp
C3                      retq
```

FIG. 4(a)

Original function into which a nopl instruction is inserted      nopl instruction

```
0000000000000010 <funcb>:

0f 1f 44 00 00          nopl   0x0 (%rax, %rax, 1)

bf 00 00 00 00          mov    $0x0, %edi
48 83 ec 08             sub    $0x8, %rsp
31 c0                   xor    %eax, %eax
e8 00 00 00 00          callq  25 <funcb+0x15>
31 c0                   xor    %eax, %eax
48 83 c4 08             add    $0x8, %rsp
C3                      retq
```

FIG. 4(b)

```
6c4:    e9 57 ff ff ff           jmpq   620 <register_tm_clones>
6c9:    0f 1f 80 00 00 00 00     nopl   0x0(%rax)
6d0:    e9 4b ff ff ff           jmpq   620 <register_tm_clones>

00000000000006d5 <PrintB>:
6d5:    0f 1f 44 00 00           nopl   0x0(%rax,%rax,1)
6da:    55                       push   %rbp
6db:    48 89 e5                 mov    %rsp,%rbp
6de:    48 83 ec 10              sub    $0x10,%rsp
6e2:    c7 45 f8 00 00 00 00     movl   $0x0,-0x8(%rbp)
6e9:    c7 45 fc 00 00 00 00     movl   $0x0,-0x4(%rbp)
6f0:    eb 0a                    jmp    6fc <PrintB+0x27>
6f2:    8b 45 fc                 mov    -0x4(%rbp),%eax
6f5:    01 45 f8                 add    %eax,-0x8(%rbp)
6f8:    83 45 fc 01              addl   $0x1,-0x4(%rbp)
6fc:    83 7d fc 63              cmpl   $0x63,-0x4(%rbp)
700:    7e f0                    jle    6f2 <PrintB+0x1d>
702:    48 8d 3d 4c 00 00 00     lea    0x4c(%rip),%rdi          # 755 <_fini+0x9>
709:    e8 c2 fe ff ff           callq  5d0 <puts@plt>
70e:    c9                       leaveq
70f:    c3                       retq

0000000000000710 <PrintD>:
710:    0f 1f 44 00 00           nopl   0x0(%rax,%rax,1)
715:    55                       push   %rbp
716:    48 89 e5                 mov    %rsp,%rbp
719:    48 83 ec 10              sub    $0x10,%rsp
71d:    c7 45 f8 00 00 00 00     movl   $0x0,-0x8(%rbp)
724:    c7 45 fc 00 00 00 00     movl   $0x0,-0x4(%rbp)
72b:    eb 0a                    jmp    737 <PrintD+0x27>
72d:    8b 45 fc                 mov    -0x4(%rbp),%eax
730:    01 45 f8                 add    %eax,-0x8(%rbp)
733:    83 45 fc 01              addl   $0x1,-0x4(%rbp)
737:    83 7d fc 63              cmpl   $0x63,-0x4(%rbp)
73b:    7e f0                    jle    72d <PrintD+0x1d>
73d:    48 8d 3d 27 00 00 00     lea    0x27(%rip),%rdi          # 76b <_fini+0x1f>
744:    e8 87 fe ff ff           callq  5d0 <puts@plt>
749:    c9                       leaveq
74a:    c3                       retq
```

FIG. 4(c)

First
instruction    | mov $0x0, %edi |

Second
instruction    | sub $0x8, %rsp |

| ... |

(a)

Insert a nopl
instruction
→

| nopl |    nopl
               instruction

| mov $0x0, %edi |    First
                       instruction

| sub $0x8, %rsp |    Second
                       instruction

| ... |    ...

(b)

Modify the nopl
instruction to an
exception instruction

| 0xf4 |    Exception
            instruction

| mov $0x0, %edi |    First
                       instruction

| sub $0x8, %rsp |    Second
                       instruction

| ... |    ...

(c)

FIG. 5

S601: When a critical section includes m bytes, modify first p bytes in the m bytes to an exception instruction

S602: After a patch function is activated, first fill last q bytes in the m bytes with an operand of a jump instruction, and then modify the first p bytes in the m bytes to an operation code of the jump instruction, to obtain the jump instruction

S603: Wake up a suspended first thread

S604: The first thread jumps to a patch area by using the jump instruction in an original function, and executes the patch function

FIG. 6

First instruction    mov $0x0, %edi

Second instruction    sub $0x8, %rsp

...    ...

(a)

Insert a nopl instruction ⟶

nopl    nopl instruction

mov $0x0, %edi    First instruction

sub $0x8, %rsp    Second instruction

...    ...

(b)

Modify the nopl instruction to an exception instruction

0xf4    Exception instruction

mov $0x0, %edi    First instruction

sub $0x8, %rsp    Second instruction

...    ...

(c)

First perform filling with an operand of a jump instruction ⟵

0xf4  offset

First instruction    mov $0x0, %edi

Second instruction    sub $0x8, %rsp

...    ...

(d)

Modify an operation code of the exception instruction to an operation code of the jump instruction

**First jump instruction**    0xe9 offset

First instruction    mov $0x0, %edi

Second instruction    sub $0x8, %rsp

...    ...

(e)

FIG. 7

First
instruction | mov $0x0, %edi

Second
instruction | sub $0x8, %rsp

... | ...

(a)

Insert a nopl
instruction
→

| nopl | nopl instruction |
| mov $0x0, %edi | First instruction |
| sub $0x8, %rsp | Second instruction |
| ... | ... |

(b)

Modify the nopl
instruction to an
exception instruction

| 0xf4 | Exception instruction |
| mov $0x0, %edi | First instruction |
| sub $0x8, %rsp | Second instruction |
| ... | ... |

(c)

First perform
filling with an
operand of a
jump
instruction
←

| 0xf4 offset | |
First
instruction | mov $0x0, %edi
Second
instruction | sub $0x8, %rsp
... | ...

(d)

Modify an operation code of
the exception instruction to
an operation code of the
jump instruction

**Second
jump
instruction** | 0xe9 offset
First
instruction | mov $0x0, %edi
Second
instruction | sub $0x8, %rsp
... | ...

(e)

FIG. 8

Function trampoline segment

| Function trampoline 1 | Function trampoline 2 | Function trampoline 3 | Function trampoline 4 | Function trampoline 5 | Function trampoline 6 |
|---|---|---|---|---|---|

FIG. 9

Start to allocate a
function trampoline to
an original function

| Function trampoline 1 | Function trampoline 2 | Function trampoline 3 | Function trampoline 4 | Function trampoline 5 | Function trampoline 6 |
|---|---|---|---|---|---|

Occupied     Occupied

Null       Not occupied

Null

Function
trampoline 3

FIG. 10

A traversal index
uiCurPos is 2

Start to allocate a
function trampoline to
an original function

A function trampoline
segment is not full

| Function trampoline 1 (in a full state) | Function trampoline 2 (in a full state) | Function trampoline 3 (in a non-full state) | Function trampoline 4 (in a non-full state) | Function trampoline 5 (in a non-full state) | Function trampoline 6 (in a non-full state) |
|---|---|---|---|---|---|

Allocate the
function
trampoline 5

FIG. 11

A traversal index
uiCurPos is 2

Start to allocate a
function trampoline to
an original function

A function trampoline
segment is full

| Function trampoline 1 (in a full state) | Function trampoline 2 (in a full state) | Function trampoline 3 (in a full state) | Function trampoline 4 (in a full state) | Function trampoline 5 (in a full state) | Function trampoline 6 (in a full state) |
|---|---|---|---|---|---|

Occupied          Occupied

Null                                    Not occupied

Null

Function
trampoline 5

FIG. 12

```
Section Headers:
  [Nr] Name              Type            Address           Off    Size   ES Flg Lk Inf Al
  [ 0]                   NULL            0000000000000000  000000 000000 00       0   0  0
  [ 1] .hash             HASH            00000000000001c8  0001c8 009c80 04    A  3   0  8
  [ 2] .gnu.hash         GNU_HASH        0000000000009e48  009e48 00a944 00    A  3   0  8
  [ 3] .dynsym           DYNSYM          0000000000014790  014790 022a88 18    A  4   1  8
  [ 4] .dynstr           STRTAB          0000000000037218  037218 01ed6e 00    A  0   0  1
  [ 5] .gnu.version      VERSYM          0000000000055f86  055f86 002e36 02    A  3   0  2
  [ 6] .gnu.version_r    VERNEED         0000000000058dc0  058dc0 000110 00    A  4   4  8
  [ 7] .rela.dyn         RELA            0000000000058ed0  058ed0 00b8b0 18    A  3   0  8
  [ 8] .rela.plt         RELA            0000000000064780  064780 012c90 18   AI  3  22  8
  [ 9] .init             PROGBITS        0000000000077410  077410 00001a 00   AX  0   0  4
  [10] .plt              PROGBITS        0000000000077430  077430 00c870 00   AX  0   0 16
  [11] .plt.got          PROGBITS        0000000000083ca0  083ca0 000188 08   AX  0   0  8
  [12] .text             PROGBITS        0000000000083e30  083e30 0f9048 00   AX  0   0 16
  [13] .fini             PROGBITS        000000000017ce78  17ce78 000009 00   AX  0   0  4
  [14] .rodata           PROGBITS        000000000017cea0  17cea0 029440 00    A  0   0 32
  [15] .eh_frame_hdr     PROGBITS        000000000001a62e0 1a62e0 00923c 00    A  0   0  4
  [16] .eh_frame         PROGBITS        000000000001af520 1af520 02fd18 00    A  0   0  8
  [17] .tbss             NOBITS          000000000003dfb50 1dfb50 000008 00  WAT  0   0  8
  [18] .init_array       INIT_ARRAY      000000000003dfb50 1dfb50 000008 08   WA  0   0  8
  [19] .fini_array       FINI_ARRAY      000000000003dfb58 1dfb58 000008 08   WA  0   0  8
  [20] .data.rel.ro      PROGBITS        000000000003dfb60 1dfb60 0002a0 00   WA  0   0 32
  [21] .dynamic          DYNAMIC         000000000003dfe00 1dfe00 000220 10   WA  4   0  8
  [22] .got              PROGBITS        000000000003e0020 1e0020 008fc8 08   WA  0   0  8
  [23] .data             PROGBITS        000000000003e9000 1e9000 0016d0 00   WA  0   0 32
  [24] .vos_patch_trampoline_seg NOBITS  000000000003eb000 1ea6d0 010000 00   WA  0   0  1
  [25] .bss              NOBITS          000000000003fb000 1ea6d0 013ac8 00   WA  0   0 64
  [26] .comment          PROGBITS        0000000000000000  1ea6d0 000011 01   MS  0   0  1
  [27] .debug_aranges    PROGBITS        0000000000000000  1ea6f0 000080 00       0   0 16
  [28] .debug_info       PROGBITS        0000000000000000  1ea770 000044 00       0   0  1
  [29] .debug_abbrev     PROGBITS        0000000000000000  1ea7b4 000024 00       0   0  1
  [30] .debug_line       PROGBITS        0000000000000000  1ea7d8 0000c5 00       0   0  1
  [31] .debug_str        PROGBITS        0000000000000000  1ea89d 00006b 01   MS  0   0  1
  [32] .debug_ranges     PROGBITS        0000000000000000  1ea910 000080 00       0   0 16
  [33] .symtab           SYMTAB          0000000000000000  1ea990 02aae0 18      34 1370  8
  [34] .strtab           STRTAB          0000000000000000  215470 02521d 00       0   0  1
  [35] .shstrtab         STRTAB          0000000000000000  23a68d 000150 00       0   0  1
Key to Flags:
```

FIG. 13

EP 4 675 423 A1

| Cache line 1 | Cache line 2 | Cache line 3 | Cache line 4 | ... |

Fetch an address
(16 bytes)

Fetch an address
(16 bytes)

Fetch an address
(16 bytes)

Fetch an address
(16 bytes)

Address

$0^{th}$ byte    $7^{th}$ byte    $15^{th}$ byte    $23^{rd}$ byte    $31^{st}$ byte    $39^{th}$ byte    $47^{th}$ byte    $55^{th}$ byte    $63^{rd}$ byte

Instruction
address

Address of a patch
function address

2 bytes

6 bytes    6 bytes

$24^{th}$ byte    $29^{th}$ byte    $37^{th}$ byte

FIG. 14A

| Cache line | Cache line 1 | Cache line 2 | Cache line 3 | Cache line 4 | ... |

Fetch an address (16 bytes)    Fetch an address (16 bytes)    Fetch an address (16 bytes)    Fetch an address (16 bytes)

Address

$0^{th}$ byte   $7^{th}$ byte   $15^{th}$ byte   $23^{rd}$ byte   $31^{st}$ byte   $39^{th}$ byte   $47^{th}$ byte   $55^{th}$ byte   $63^{rd}$ byte

**Left blank**   Instruction address   Address of a patch function address

**2 bytes**   6 bytes   8 bytes

$24^{th}$ byte   $25^{th}$ byte   $31^{st}$ byte   $39^{th}$ byte

FIG. 14B

```
Here is bin func TrampolineX64TestFunc001
Here is bin func TrampolineX64TestFunc002
Here is bin func TrampolineX64TestFunc003
Here is bin func TrampolineX64TestFunc004
Here is bin func TrampolineX64TestFunc005
Here is bin func TrampolineX64TestFunc006
Here is bin func TrampolineX64TestFunc007
Here is bin func TrampolineX64TestFunc008
Here is bin func TrampolineX64TestFunc009
Here is patch1 func TrampolineX64TestFunc001
Here is patch1 func TrampolineX64TestFunc002
Here is patch1 func TrampolineX64TestFunc003
Here is patch2 func TrampolineX64TestFunc004
Here is patch2 func TrampolineX64TestFunc005
Here is patch2 func TrampolineX64TestFunc006
Here is patch3 func TrampolineX64TestFunc007
Here is patch3 func TrampolineX64TestFunc008
Here is patch3 func TrampolineX64TestFunc009
Here is bin func TrampolineX64TestFunc001
Here is bin func TrampolineX64TestFunc002
Here is bin func TrampolineX64TestFunc003
Here is bin func TrampolineX64TestFunc004
Here is bin func TrampolineX64TestFunc005
Here is bin func TrampolineX64TestFunc006
Here is bin func TrampolineX64TestFunc007
Here is bin func TrampolineX64TestFunc008
Here is bin func TrampolineX64TestFunc009
```

Before patching

After patching

After a patch is deleted

FIG. 15

S1601: Determine a to-be-patched original function in a program

↓

S1602: Insert a nopl instruction of m bytes into a function header of the original function

↓

S1603: Modify the nopl instruction to an exception instruction

↓

S1604: Obtain an address of the original function and an address of a patch function, and calculate an offset between the address of the original function and the address of the patch function

↓

S1605: Is the offset between the address of the original function and the address of the patch function greater than a preset offset? — Yes → TO FIG. 16B

↓ No

S1606: Modify the exception instruction based on the offset between the address of the original function and the address of the patch function, to obtain a first jump instruction

↓

S1607: A thread executes the first jump instruction, and runs the patch function

FIG. 16A

CONT.
FROM
FIG. 16A
~

S1608: Allocate a first function trampoline to the original function, and obtain an address of the first function trampoline

S1609: Modify an instruction in the first function trampoline based on the address of the patch function, to obtain a third jump instruction

S1610: Modify the exception instruction based on an offset between the address of the original function and the address of the first function trampoline, to obtain a second jump instruction

S1611: A thread executes the second jump instruction to jump to the first function trampoline

S1612: The thread then executes the third jump instruction to jump to a patch area to run the patch function

FIG. 16B

S1701: Obtain a first patch function, and store the first patch function in a patch area, where the first patch function is used to modify a first original function in a program, an address of the first original function is a first address, and an address of the first patch function is a second address

↓

S1702: Insert an exception instruction before a first instruction in the first original function, where the exception instruction is used by a thread to suspend execution of an instruction in the first original function after execution advances to the exception instruction

↓

S1703: Modify the exception instruction to a jump instruction based on the first address and the second address, where the jump instruction is used by the thread to jump to the patch area when the first original function is accessed, to execute an instruction in the first patch function

FIG. 17

Patch execution apparatus 1800

| Obtaining module 1801 | ⟷ | Patch module 1802 | ⟷ | Execution module 1803 |

FIG. 18

FIG. 19

## INTERNATIONAL SEARCH REPORT

| International application No. |
|---|
| **PCT/CN2024/079345** |

### A. CLASSIFICATION OF SUBJECT MATTER

G06F8/658(2018.01)i

According to International Patent Classification (IPC) or to both national classification and IPC

### B. FIELDS SEARCHED

Minimum documentation searched (classification system followed by classification symbols)

IPC: G06F

Documentation searched other than minimum documentation to the extent that such documents are included in the fields searched

Electronic data base consulted during the international search (name of data base and, where practicable, search terms used)

CNTXT, DWPI, ENTXTC: 补丁, 补丁区, 插入, 函数, 跳转, 跳转岛, 异常, 指令, patch, instruction, insert, jump, interrupt

### C. DOCUMENTS CONSIDERED TO BE RELEVANT

| Category* | Citation of document, with indication, where appropriate, of the relevant passages | Relevant to claim No. |
|---|---|---|
| X | CN 112988182 A (ZTE CORP.) 18 June 2021 (2021-06-18)<br>description, paragraphs [0049] to [0069] | 1-7, 9-18, 20-24 |
| A | CN 102156661 A (HUAWEI TECHNOLOGIES CO., LTD.) 17 August 2011 (2011-08-17)<br>entire document | 1-24 |
| A | CN 101561764 A (HUAWEI TECHNOLOGIES CO., LTD.) 21 October 2009 (2009-10-21)<br>entire document | 1-24 |
| A | CN 101799763 A (HUAWEI TECHNOLOGIES CO., LTD.) 11 August 2010 (2010-08-11)<br>entire document | 1-24 |
| A | CN 107357622 A (MAIPU COMMUNICATION TECHNOLOGY CO., LTD.) 17 November 2017 (2017-11-17)<br>entire document | 1-24 |
| A | US 9164754 B1 (AMAZON TECHNOLOGIES, INC.) 20 October 2015 (2015-10-20)<br>entire document | 1-24 |

☐ Further documents are listed in the continuation of Box C.　　☑ See patent family annex.

| | |
|---|---|
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **08 April 2024** | **16 April 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2024/079345**

| Patent document cited in search report | | | Publication date (day/month/year) | Patent family member(s) | | | Publication date (day/month/year) |
|---|---|---|---|---|---|---|---|
| CN | 112988182 | A | 18 June 2021 | WO | 2021115036 | A1 | 17 June 2021 |
| | | | | US | 2023016250 | A1 | 20 January 2023 |
| CN | 102156661 | A | 17 August 2011 | WO | 2011097901 | A1 | 18 August 2011 |
| | | | | US | 2012102476 | A1 | 26 April 2012 |
| | | | | EP | 2434394 | A1 | 28 March 2012 |
| | | | | IN | 201105111 | P2 | 26 August 2016 |
| CN | 101561764 | A | 21 October 2009 | US | 2012066484 | A1 | 15 March 2012 |
| | | | | WO | 2010133160 | A1 | 25 November 2010 |
| | | | | EP | 2333666 | A1 | 15 June 2011 |
| CN | 101799763 | A | 11 August 2010 | US | 2010205587 | A1 | 12 August 2010 |
| CN | 107357622 | A | 17 November 2017 | | None | | |
| US | 9164754 | B1 | 20 October 2015 | | None | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310317574